# EUROPÄISCHE PATENTSCHRIFT

(11) **EP 4 179 471 B1**
(45) Veröffentlichungstag und Bekanntmachung des Hinweises auf die Patenterteilung: **17.06.2026**
(21) Anmeldenummer: 21743441.4
(22) Anmeldetag: 12.07.2021
(51) Int. Cl.: G06N 5/045, G06N 3/0464, G06N 3/09

(54) **VERFAHREN UND VORRICHTUNG ZUM BEWERTEN UND ZERTIFIZIEREN EINER ROBUSTHEIT EINES KI-BASIERTEN INFORMATIONSVERARBEITUNGSSYSTEMS**
METHOD AND DEVICE FOR EVALUATING AND CERTIFYING THE ROBUSTNESS OF AN AI-BASED INFORMATION PROCESSING SYSTEM
PROCÉDÉ ET DISPOSITIF POUR ÉVALUER ET CERTIFIER UNE ROBUSTESSE D'UN SYSTÈME DE TRAITEMENT D'INFORMATION FONDÉ SUR L'IA

(30) Priorität: 13.07.2020 DE 102020208737
(43) Veröffentlichungstag der Anmeldung: 17.05.2023
(73) Patentinhaber: VOLKSWAGEN AKTIENGESELLSCHAFT, 38440 Wolfsburg (DE)
(72) Erfinder: HÜGER, Fabian, 38302 Wolfenbüttel (DE); SCHLICHT, Peter, 38442 Wolfsburg (DE); SCHMIDT, Nico, 10719 Berlin (DE)
(86) Internationale Anmeldenummer: PCT/EP2021/069265
(87) Internationale Veröffentlichungsnummer: WO 2022/013121

(56) Entgegenhaltungen:
- BAIDU SECURITY X-LAB: "Tackling AI Challenges in Safety-Critical Scenarios - A Review on Robustness of Deep Learning Models and the Release of Perceptron Robustness Benchmark Tools", 18 June 2019 (2019-06-18), https://medium.com, pages 1 - 8, XP055854393, Retrieved from the Internet <URL:https://medium.com/baiduxlab/tackling-ai-challenges-in-safety-critical-scenarios-a-review-on-robustness-of-deep-learning-8e0e30ff1018> [retrieved on 20211025]
- TIAN YUCHI YUCHI@VIRGINIA EDU ET AL: "DeepTest automated testing of deep-neural-network-driven autonomous cars", SOFTWARE ENGINEERING, ACM, 2 PENN PLAZA, SUITE 701NEW YORKNY10121-0701USA, 27 May 2018 (2018-05-27), pages 303 - 314, XP058634214, ISBN: 978-1-4503-5638-1, DOI: 10.1145/3180155.3180220
- UTJENS BJÖRN ET AL: "Certified Adversarial Robustness for Deep Reinforcement Learning", 6 March 2020 (2020-03-06), arXiv.org, pages 1 - 11, XP055854483, Retrieved from the Internet <URL:https://arxiv.org/pdf/1910.12908.pdf> [retrieved on 20211025]

## Beschreibung

Die Erfindung betrifft ein Verfahren und eine Vorrichtung zum Bewerten und Zertifizieren einer Robustheit eines Kl-basierten Informationsverarbeitungssystems.

Maschinelles Lernen, beispielsweise auf Grundlage von Neuronalen Netzen, hat großes Potenzial für eine Anwendung in modernen Fahrerassistenzsystemen und automatisiert fahrenden Fahrzeugen. Auf tiefen Neuronalen Netzen basierende Funktionen verarbeiten hierbei Sensordaten (zum Beispiel von Kameras, Radar- oder Lidarsensoren), um hieraus relevante Informationen abzuleiten. Diese Informationen umfassen zum Beispiel eine Art und eine Position von Objekten in einem Umfeld des Kraftfahrzeugs, ein Verhalten der Objekte oder eine Fahrbahngeometrie oder -topologie.

Ein wesentliches Merkmal bei der Entwicklung von Kl-basierten Informationsverarbeitungssystemen (dem Training) liegt im rein datengetriebenen Parameterfitting ohne Experteneingriff. Beispielsweise bei tiefen Neuronalen Netzen wird hierbei eine Abweichung einer Ausgabe (für eine gegebene Parametrierung) des Neuronalen Netzes von einer Grundwahrheit (engl. ground truth) bestimmt (der sogenannte Loss). Die hierbei verwendete Lossfunktion wird in einer Weise gewählt, dass die Parameter des Neuronalen Netzes differenzierbar von dieser abhängen. Im Rahmen des Gradientenabstiegsverfahrens werden in jedem Trainingsschritt die Parameter des Neuronalen Netzes in Abhängigkeit der Ableitung der (auf mehreren Beispielen ermittelten) Abweichung angepasst. Diese Trainingsschritte werden sehr oft wiederholt, bis sich der Loss nicht mehr verringert.

Bei diesem Vorgehen werden die Parameter eines Kl-basierten Informationsverarbeitungssystems, insbesondere eines Neuronalen Netzes, ohne eine Experteneinschätzung oder eine semantisch motivierte Modellierung ermittelt. Dies kann wesentliche Folgen für die Eigenschaften des Kl-basierten Informationsverarbeitungssystems, insbesondere des Neuronalen Netzes, nach sich ziehen.

Insbesondere sind tiefe Neuronale Netze für den Menschen weitgehend intransparent und ihre Berechnungen nicht interpretierbar. Dies stellt eine massive Einschränkung für ein systematisches Testen oder eine formale Überprüfung dar.

Ferner sind insbesondere tiefe Neuronale Netze anfällig für schädliche Störeinflüsse, sogenannte adversariale Störungen (engl. adversarial perturbations): kleine, für den Menschen kaum wahrnehmbare oder einen semantischen Inhalt nicht verändernde Manipulationen an den Eingangsdaten können zu komplett anderen Ausgangsdaten führen. Solche Manipulationen können sowohl mutwillig herbeigeführte Veränderungen der Daten ("Neural Hacking") als auch zufällig auftretende Bildveränderungen (Sensorrauschen, Witterungseinflüsse, bestimmte Farben oder Kontraste) sein.

Ferner ist insbesondere unklar, auf welche Eingangsmerkmale ein Neuronales Netz sensibilisiert. Dies sorgt dafür, dass synthetisch, beispielsweise durch Simulation, erzeugte Daten bisher kaum erfolgreich für das Training von Neuronalen Netzen verwendet werden können: in Simulation oder auf anderweitig synthetischen Daten trainierte Neuronale Netze weisen eine erstaunlich schwache Performanz auf reellen Sensordaten auf. Auch eine Ausführung von Neuronalen Netzen in einer anderen Datendomäne (Training im Sommer, Ausführung im Winter etc.) reduziert die funktionale Güte teilweise drastisch. Dies hat u.a. zur Folge, dass die vom Kostenstandpunkt aus sehr attraktiv klingende Möglichkeit der Entwicklung und Freigabe von Neuronalen Netzen in Simulation (Entfall teuren Labellings und aufwendiger Realtests) nicht realistisch scheint.

Insbesondere der zweite Punkt hat starke Bedeutung für eventuelle Einschränkungen potenter Neuronaler Netze im Bereich funktionaler Sicherheit. Um letztere zu messen ist es unabdingbar, eine Einschätzung der Robustheit der Netzausführung gegenüber geringfügigen Veränderungen (Augmentierungen) der Eingangsdaten zu messen. Da solche Änderungen mannigfaltig sein können (Sensorrauschen, Witterungseinflüsse, Bildmanipulationen, semantisch nicht bedeutungsvolle Inhaltsveränderungen, z.B. der Wandfarbe von Hintergrundgebäuden), gibt es kein eindeutiges und akzeptiertes Maß für die Robustheit. Vielmehr müssen viele Robustheitswerte gegen Störungen (d.h. Augmentierungen) verschiedener Art und Intensität gemessen werden. Weiter ist die Robustheit Neuronaler Netze keine absolute Größe, sondern vielmehr von aktuellen Eingangsdaten abhängig.

Daher ist ein Verfahren und eine Vorrichtung zur automatischen Bewertung und Zertifizierung der Robustheit von Kl-basierten Informationsverarbeitungssystemen wünschenswert, das bereits während der Entwicklung von Kl-basierten Funktionen Robustheitswerte überprüfen und die Wirksamkeit von Robustifizierungsmaßnahmen bewerten kann.

Aus der DE 10 2018 218 586 A1 ist ein Verfahren zum Erzeugen robuster automatisch lernender Systeme und Testen trainierter automatisch lernender Systeme bekannt.

Aus Baidu Security X-Lab, Tackling AI Challenges in Safety-Critical Scenarios - A Review on Robustness of Deep Learning Models and the Release of Perceptron Robustness Benchmark Tools, 18. Juni 2019, Seiten 1-8, URL: https://medium.com/baiduxlab/tackling-ai-challenges-in-safetycritical-scenarios-a-review-on-robustness-of-deeplearning-8e0e30ff1018, beschreibt Werkzeuge zum Beurteilen einer Robustheit von Modellen des tiefen Lernens.

Der Erfindung liegt die Aufgabe zu Grunde, ein Verfahren und eine Vorrichtung zum Bewerten und Zertifizieren einer Robustheit eines Kl-basierten Informationsverarbeitungssystems zu schaffen.

Die Aufgabe wird erfindungsgemäß durch ein Verfahren mit den Merkmalen des Patentanspruchs 1 und eine Vorrichtung mit den Merkmalen des Patentanspruchs 10 gelöst. Vorteilhafte Ausgestaltungen der Erfindung ergeben sich aus den Unteransprüchen.

Insbesondere wird ein Verfahren nach Anspruch 1 zum Bewerten und Zertifizieren einer Robustheit eines Kl-basierten Informationsverarbeitungssystems zur Verfügung gestellt, wobei das Kl-basierte Informationsverarbeitungssystem eine Funktion für das automatisierte Fahren eines Kraftfahrzeugs und/oder für eine Fahrerassistenz des Kraftfahrzeugs und/oder für eine Erfassung des Umfelds des Kraftfahrzeugs und/oder Wahrnehmung des Umfelds des Kraftfahrzeugs oder für eine andere Anwendung bereitstellt, wobei zugehörig zu dem Kl-basierten Informationsverarbeitungssystem mindestens eine multidimensionale Datenstruktur empfangen oder erzeugt wird, wobei in der mindestens einen multidimensionalen Datenstruktur jeweils zumindest mittels mindestens eines Differenzmaßes bestimmte Differenzwerte zwischen Ausgangsdaten des Kl-basierten Informationsverarbeitungssystems, die für Daten und augmentierte Daten erhalten wurden, in Abhängigkeit zumindest der Dimensionen Datensatz, Datenaugmentierungsdefinition(en) und Differenzmaßdefinition(en) hinterlegt sind, wobei aus zumindest einer Auswahl der Differenzwerte mindestens eine Robustheit des Kl-basierten Informationsverarbeitungssystems bestimmt und mit mindestens einer Robustheitsanforderung verglichen wird, und wobei basierend auf einem Vergleichsergebnis das Kl-basierte Informationsverarbeitungssystem entweder verworfen, mit einer geänderten multidimensionalen Datenstruktur erneut bewertet oder als robust zertifiziert wird.

Ferner wird insbesondere eine Vorrichtung nach Anspruch 10 zum Bewerten und Zertifizieren einer Robustheit eines Kl-basierten Informationsverarbeitungssystems geschaffen, wobei das Kl-basierte Informationsverarbeitungssystem eine Funktion für das automatisierte Fahren eines Kraftfahrzeugs und/oder für eine Fahrerassistenz des Kraftfahrzeugs und/oder für eine Erfassung des Umfelds des Kraftfahrzeugs und/oder Wahrnehmung des Umfelds des Kraftfahrzeugs oder für eine andere Anwendung bereitstellt, umfassend eine Datenverarbeitungseinrichtung, wobei die Datenverarbeitungseinrichtung dazu eingerichtet ist, zugehörig zu dem Kl-basierten Informationsverarbeitungssystem mindestens eine multidimensionale Datenstruktur zu empfangen oder zu erzeugen, wobei in der mindestens einen multidimensionalen Datenstruktur jeweils zumindest mittels mindestens eines Differenzmaßes bestimmte Differenzwerte zwischen Ausgangsdaten des Kl-basierten Informationsverarbeitungssystems, die für Daten und augmentierte Daten erhalten wurden, in Abhängigkeit zumindest der Dimensionen Datensatz, Datenaugmentierungsdefinition(en) und Differenzmaßdefinition(en) hinterlegt sind, aus zumindest einer Auswahl der Differenzwerte mindestens eine Robustheit des Kl-basierten Informationsverarbeitungssystems zu bestimmen und mit mindestens einer Robustheitsanforderung zu vergleichen, und basierend auf einem Vergleichsergebnis das Kl-basierte Informationsverarbeitungssystem entweder zu verwerfen, mit einer geänderten multidimensionalen Datenstruktur erneut zu bewerten oder als robust zu zertifizieren.

Das Verfahren und die Vorrichtung ermöglichen es, automatisiert die Robustheit eines Kl-basierten Informationsverarbeitungssystems zu bewerten und zu zertifizieren. Dies erfolgt, indem eine multidimensionale Datenstruktur empfangen oder erzeugt wird. In der mindestens einen multidimensionalen Datenstruktur sind jeweils zumindest mittels mindestens eines Differenzmaßes bestimmte Differenzwerte zwischen Ausgangsdaten des Kl-basierten Informationsverarbeitungssystems in Abhängigkeit zumindest der Dimensionen Datensatz, Datenaugmentierungsdefinition(en) und Differenzmaßdefinition(en) hinterlegt, wobei die Differenzwerte für Daten und augmentierte Daten erhalten wurden. Anders ausgedrückt enthält jeder Datenpunkt der multidimensionalen Datenstruktur einen Differenzwert, der angibt, wie groß eine mittels eines vorgegebenen Differenzmaßes bestimmte Differenz eines Ergebnisses des Kl-basierten Informationsverarbeitungssystems für Daten (des Datensatzes) und für mittels eines Datenaugmentierungsverfahrens augmentierte Daten (des Datensatzes) ist. Das Datenaugmentierungsverfahren kann den Daten hierbei beispielsweise eine adversariale Störung oder Rauschen hinzugefügt haben. Aus zumindest einer Auswahl, das heißt einer Teilmenge, der in der multidimensionalen Datenstruktur enthaltenen Differenzwerte wird mindestens eine Robustheit des Kl-basierten Informationsverarbeitungssystems bestimmt und mit mindestens einer Robustheitsanforderung verglichen. Basierend auf einem Vergleichsergebnis wird das Kl-basierte Informationsverarbeitungssystem entweder verworfen, mit einer geänderten multidimensionalen Datenstruktur erneut bewertet oder als robust zertifiziert.

Ein Vorteil des Verfahrens und der Vorrichtung ist, dass ein Kl-basiertes Informationsverarbeitungssystem vollautomatisch bewertet und/oder zertifiziert werden kann. Insbesondere ist vorgesehen, dass zu einem KI-basierten Informationsverarbeitungssystem, das hinsichtlich einer Robustheit überprüft, bewertet und/oder zertifiziert werden soll, hiermit korrespondierend auch die multidimensionale Datenstruktur bereitgestellt wird. Die bereitgestellte multidimensionale Datenstruktur kann beispielsweise vorher bei einer Entwicklung des Kl-basierten Informationsverarbeitungssystems für verschiedene Datensätze, Datenaugmentierungsverfahren und/oder Differenzmaße erstellt worden sein.

Es ist vorgesehen, dass das Kl-basierte Informationsverarbeitungssystem eine Funktion für das automatisierte Fahren eines Kraftfahrzeugs und/oder für eine Fahrerassistenz des Kraftfahrzeugs und/oder für eine Umfelderfassung und/oder Umfeldwahrnehmung bereitstellt. Insbesondere ist vorgesehen, dass ein Kl-basiertes Informationsverarbeitungssystem, beispielsweise ein trainiertes Neuronales Netz, in den Speicher von mindestens einem Steuergerät geladen wird und dort ausgeführt bzw. angewendet wird, um mittels einer Sensorik erfasste Sensordaten auszuwerten und zu verarbeiten und beispielsweise Steuersignale, beispielsweise für eine Aktorik, zu erzeugen und bereitzustellen. Zusätzlich kann auch eine zugehörige mindestens eine multidimensionale Datenstruktur in dem Speicher hinterlegt werden oder hinterlegt sein.

Es kann prinzipiell alternativ oder zusätzlich jedoch auch vorgesehen sein, dass das Verfahren und die Vorrichtung bei anderen Anwendungen eingesetzt werden. Dies können beispielsweise eine automatisierte Flottensteuerung, eine Innenraumüberwachung, eine Fahrerbeobachtung, eine Produktionssteuerung, eine Videoüberwachung, Robotikanwendungen, ein automatisiertes Fliegen, automatisierte Schienenfahrzeuge oder Anwendungen in der Raumfahrt sein. Auch bei diesen Anwendungen, welche nicht in den Wortlaut der Ansprüche fallen, ist insbesondere vorgesehen, dass ein KI-basiertes Informationsverarbeitungssystem in den Speicher von mindestens einem Steuergerät geladen wird, wobei mittels des mindestens einen Steuergeräts das Kl-basierte Informationsverarbeitungssystem ausgeführt wird, beispielsweise zum Auswerten von erfassten Sensordaten und zum Erzeugen und Bereitstellen von Steuersignalen, beispielsweise für einen Produktionsablauf und/oder für mindestens eine Aktorik. Zusätzlich kann auch eine zugehörige mindestens eine multidimensionale Datenstruktur in dem Speicher hinterlegt werden oder hinterlegt sein.

Es ist vorgesehen, dass das Kl-basierte Informationsverarbeitungssystem in einem Steuergerät nur aktiviert wird und/oder ausgeführt wird, wenn eine Zertifizierung nachgewiesen ist, beispielsweise indem das Vorliegen einer Robustheitszertifizierung überprüft wird. Es ist hierzu vorgesehen, dass eine Information in dem Speicher des Steuergeräts geändert oder hinterlegt wird, die eine Erlaubnis zur Aktivierung bzw. Verwendung des Kl-basierten Informationsverarbeitungssystems, beinhaltet. Es ist hierbei vorgesehen, dass die Aktivierung mittels eines entsprechenden, eine Zertifizierung beinhaltenden, Ergebnissignals erfolgt, das dem Steuergerät zugeführt wird, und das die Aktivierung in dem Steuergerät bewirkt.

Ein KI-basiertes Informationsverarbeitungssystem ist insbesondere ein Informationsverarbeitungssystem, das auf einem Verfahren der Künstlichen Intelligenz (Kl) basiert. Beispielsweise kann das Kl-basierte Informationsverarbeitungssystem als tiefes Neuronales Netz ausgestaltet sein oder mindestens ein solches umfassen. Prinzipiell kann das in dieser Offenbarung beschriebene Verfahren jedoch auch bei anderen Kl-basierten Informationsverarbeitungssystemen eingesetzt werden, beispielsweise bei regelbasierten Informationsverarbeitungssystemen. Das mindestens eine KI-basierte Informationsverarbeitungssystem ist insbesondere trainiert und/oder abschließend parametriert. Beispielsweise kann das Kl-basierte Informationsverarbeitungssystem ein trainiertes Neuronales Netz sein. Ein KI-basiertes Informationsverarbeitungssystem umfasst insbesondere eine Strukturbeschreibung und Parameter und/oder ist durch eine Strukturbeschreibung und Parameter definiert.

Eine multidimensionale Datenstruktur wird insbesondere zumindest durch die Dimensionen Kl-basiertes Informationsverarbeitungssystem, Datensatz, Datenaugmentierungsdefinition und Differenzmaßdefinition definiert. Die Dimension Kl-basiertes Informationsverarbeitungssystem umfasst als Wertebereich insbesondere alle vorgesehenen Kl-basierten Informationsverarbeitungssysteme (sofern mehr als ein KI-basiertes Informationsverarbeitungssystem vorhanden ist bzw. geprüft werden soll). Wenn nur ein KI-basierten Informationsverarbeitungssystem vorhanden ist bzw. überprüft werden soll, kann die Dimension KI-basiertes Informationsverarbeitungssystem auch entfallen. Die Dimension Datensatz umfasst insbesondere als Wertebereich alle vorgesehenen Datensätze. Die Dimension Datenaugmentierungsdefinition umfasst als Wertebereich insbesondere alle vorgesehenen Datenaugmentierungsverfahren. Die Dimension Differenzmaßdefinition umfasst als Wertebereich insbesondere alle vorgesehenen Differenzmaße. Jeder Kombination von Werten innerhalb dieser Dimensionen ist ein Datenpunkt zugeordnet, der zumindest einen Differenzwert umfasst.

Ein Datensatz umfasst insbesondere Daten. Die Daten können insbesondere eindimensional oder mehrdimensional, insbesondere zweidimensional, sein. Beispielsweise können die Daten Bilder einer Kamera oder eines Lidarsensors sein. Prinzipiell können jedoch beliebige Sensordaten verwendet werden.

Eine Datenaugmentierungsdefinition definiert insbesondere eine Datenaugmentierung bzw. ein Datenaugmentierungsverfahren. Die Datenaugmentierungsdefinition gibt an, wie Daten des Datensatzes verändert werden sollen. Es kann hierbei eine Vielzahl von Veränderungen vorgesehen sein. Beispielhaft genannt seien: Hinzufügen von Rauschen, Hinzufügen einer oder mehrerer adversarialer Störungen und/oder Sensorstörungen, Änderung eines Kontrastes, Änderung einer Helligkeit, Änderung von Farben, Änderung einer Witterungsbedingung (z.B. Hinzufügen von Schnee oder Regen in einem Kamerabild, das im Sommer bei Sonnenschein erfasst wurde). Eine Datenaugmentierung bzw. ein Datenaugmentierungsverfahren wird insbesondere in Abhängigkeit von physikalischen Sensoreigenschaften (Störungen etc.) und/oder möglichen physikalischen und/oder technischen Störungen der Sensorik und/oder möglichen adversarialen Störungen ausgestaltet bzw. definiert.

Eine Differenzmaßdefinition definiert insbesondere ein Differenzmaß. Das Differenzmaß gibt insbesondere an, wie Ausgangsdaten eines Kl-basierten Informationsverarbeitungssystems, die für (nicht augmentierte) Daten des Datensatzes erzeugt wurden, mit Ausgangsdaten des KI-basierten Informationsverarbeitungssystems, die für augmentierte Daten erzeugt wurden, verglichen werden sollen. Gibt das Kl-basierte Informationsverarbeitungssystem beispielsweise einen Vektor als Ausgangsdaten aus, so kann ein Differenzmaß den Vergleich der Vektoren umfassen, beispielsweise indem ein Unterschied zwischen den Vektoren bestimmt wird. Ein einfaches Beispiel für ein weiteres Differenzmaß ist das folgende: Gibt das Kl-basierte Informationsverarbeitungssystem beispielsweise als Ausgangsdaten aus, wie viele Fußgänger in einem erfassten Kamerabild vorhanden sind, so kann die jeweils für die Daten und die augmentierten Daten ausgegebene Anzahl miteinander verglichen werden (z.B. 3 Fußgänger gegenüber 5 Fußgängern, sodass der Differenzwert gleich 2 Fußgänger ist).

Sind in einem Datensatz zeitlich sequentielle Daten hinterlegt, so kann ein Differenzmaß sich auch auf zeitlich sequentielle, das heißt zeitlich benachbarte, Daten beziehen. Hierdurch kann eine Datenbasis zur Robustheitsbeurteilung bei der Verarbeitung von Videosequenzen (oder anderen zeitlich sequentiellen Daten) durch ein KI-basiertes Informationsverarbeitungssystem erzeugt und bereitgestellt werden. Beispielsweise kann im Rahmen der Robustheitsbeurteilung überprüft werden, ob ein Fußgänger in einer Videosequenz über mehrere Videoeinzelbilder hinweg von dem KI-basierten Informationsverarbeitungssystem zuverlässig als Fußgänger erkannt wird oder nicht.

In der multidimensionalen Datenstruktur sind insbesondere auch sämtliche beim Erzeugen der multidimensionalen Datenstruktur maßgeblichen Artefakte als Metadaten und/oder Header in der multidimensionalen Datenstruktur hinterlegt. Diese Artefakte umfassen beispielsweise: Verweise auf einen verwendeten Softwarecode, Verweise auf das mindestens eine KI-basierte Informationsverarbeitungssystem sowie zum Trainieren verwendete Hyperparameter, Verweise auf einen oder mehrere verwendete Datensätze (ggf. inkl. von Beschreibungsdaten) und/oder verwendete Anfangswerte für verwendete Zufallsgeneratoren ("Random Seeds").

Teile der Datenverarbeitungseinrichtung können einzeln oder zusammengefasst als eine Kombination von Hardware und Software ausgebildet sein, beispielsweise als Programmcode, der auf einem Mikrocontroller oder Mikroprozessor ausgeführt wird.

In einer Ausführungsform ist vorgesehen, dass das mindestens eine KI-basierte Informationsverarbeitungssystem ein Neuronales Netz ist und/oder mindestens ein Neuronales Netz umfasst. Das Neuronale Netz kann insbesondere ein tiefes Neuronales Netz sein, beispielsweise ein Faltungsnetz. Ein Neuronales Netz umfasst insbesondere eine Strukturbeschreibung sowie Parameter (z.B. Filterparameter, Gewichtungen, Aktivierungsfunktionen etc.) des Neuronalen Netzes. Das Neuronale Netz ist insbesondere ein trainiertes Neuronales Netz.

In einer Ausführungsform ist vorgesehen, dass das Kl-basierte Informationsverarbeitungssystem nach einer Zertifizierung in einen Speicher von mindestens einem Steuergerät eingeladen wird. Insbesondere werden eine Strukturbeschreibung und Parameter des Kl-basierten Informationsverarbeitungssystems in den Speicher des mindestens einen Steuergeräts eingeladen, sodass das Kl-basierte Informationsverarbeitungssystem anschließend von dem mindestens einen Steuergerät ausgeführt bzw. angewendet werden kann. Das Steuergerät ist insbesondere ein Steuergerät eines Kraftfahrzeugs. Hierdurch kann das als robust zertifizierte KI-basierte Informationsverarbeitungssystem anschließend direkt und/oder automatisch in dem mindestens einen Steuergerät verwendet werden. Das Steuergerät kann beispielsweise ein Steuergerät eines Kraftfahrzeugs sein, das beispielsweise Sensordaten auswertet und beispielsweise mittels des Kl-basierten Informationsverarbeitungssystems eine Umfeldwahrnehmung (z.B. Objekterkennung) durchführt und insbesondere Steuerdaten, beispielsweise für mindestens eine Aktorik, erzeugt und bereitstellt.

In einer Ausführungsform ist vorgesehen, dass zum Bereitstellen einer geänderten multidimensionalen Datenstruktur mindestens eine der folgenden Dimensionen geändert und/oder erweitert wird: Datensatz, Datenaugmentierungsdefinition, Differenzmaßdefinition. Hierdurch kann eine Datenbasis zur Robustheitsbeurteilung verändert werden. Insbesondere ist es hierdurch möglich, schrittweise die Robustheitsanforderungen für die Bewertung und Zertifizierung des Kl-basierten Informationsverarbeitungssystems zu erhöhen. Insbesondere kann hierdurch bereits bei der Entwicklung eines Kl-basierten Informationsverarbeitungssystems die Robustheit des Kl-basierten Informationsverarbeitungssystems (schrittweise) gesteigert werden, beispielsweise indem schon zu Beginn der Entwicklung eines Kl-basierten Informationsverarbeitungssystems als wenig robust bewertete Varianten des Kl-basierten Informationsverarbeitungssystems verworfen werden, wohingegen als robust bewertete Varianten des Kl-basierten Informationsverarbeitungssystems schrittweise weiter gegenüber weiteren Robustheitsanforderungen bewertet und/oder zertifiziert werden können. Beim Ändern und/oder Erweitern können beispielsweise andere Daten und/oder andere Datendomänen in dem Datensatz berücksichtigt werden. Ferner kann der Datensatz um weitere Daten erweitert werden. Es können auch weitere Datenaugmentierungsdefinitionen für weitere Datenaugmentierungsverfahren hinzugefügt werden. Alternativ oder zusätzlich können Parameter der Datenaugmentierungsverfahren in der Datenaugmentierungsdefinition geändert werden. Die Differenzmaße können geändert oder durch weitere Differenzmaße ergänzt werden.

In einer Ausführungsform ist vorgesehen, dass eine Struktur und/oder Parameter und/oder ein Training des Kl-basierten Informationsverarbeitungssystems basierend auf dem Vergleichsergebnis geändert wird, wobei das geänderte KI-basierte Informationsverarbeitungssystem erneut bewertet und/oder zertifiziert wird. Hierdurch kann die Bewertung der Robustheit direkt als Rückkopplung bei der Entwicklung eines Kl-basierten Informationsverarbeitungssystems verwendet werden, beispielsweise im Wege des AutoML (Auto Machine Learning), bei dem automatisiert geänderte Neuronale Netze bzw. Varianten von Neuronalen Netzen erzeugt und hinsichtlich einer Robustheit bewertet werden können. Die Entwicklung und Optimierung von robusten Kl-basierten Informationsverarbeitungssystemen kann hierdurch automatisiert durchgeführt werden.

In einer Ausführungsform ist vorgesehen, dass eine Menge aus mehreren unterschiedlichen Kl-basierten Informationsverarbeitungssystemen bewertet wird, wobei dasjenige KI-basierte Informationsverarbeitungssystem, insbesondere zum Einladen und/oder Anwenden in einem Steuergerät, insbesondere eines Steuergeräts eines Kraftfahrzeugs, ausgewählt wird, das die mindestens eine Robustheitsanforderung hinsichtlich zumindest eines Optimierungskriteriums am besten erfüllt. Hierdurch kann die Entwicklung von robusten Kl-basierten Informationsverarbeitungssystemen durch Erzeugen von Varianten der Kl-basierten Informationsverarbeitungssysteme und anschließender Auswahl der robustesten Variante(n) erfolgen. Für jedes der Kl-basierten Informationsverarbeitungssysteme wird hierbei eine mit dem betrachteten Kl-basierten Informationsverarbeitungssystem korrespondierende multidimensionale Datenstruktur verwendet.

In einer Ausführungsform ist vorgesehen, dass das Vergleichsergebnis für jede der mindestens einen Robustheitsanforderungen ausgegeben wird. Hierdurch kann ein detaillierter Bericht erzeugt und bereitgestellt werden, sodass ein Ergebnis der Bewertung und/oder Zertifizierung der Robustheit des Kl-basierten Informationsverarbeitungssystems detailliert dokumentiert werden kann.

In einer Ausführungsform ist vorgesehen, dass zusätzlich mindestens ein geändertes Kl-basiertes Informationsverarbeitungssystem bewertet wird, wobei die jeweils bestimmten Robustheiten des Kl-basierten Informationsverarbeitungssystems und des mindestens einen geänderten Kl-basierten Informationsverarbeitungssystems miteinander verglichen werden, und wobei basierend auf einem Vergleichsergebnis der Robustheiten eine Selektionsentscheidung für das Kl-basierte Informationsverarbeitungssystem oder das mindestens eine geänderte Kl-basierte Informationsverarbeitungssystem getroffen wird. Hierdurch kann eine schrittweise Anpassung des Kl-basierten Informationsverarbeitungssystems erfolgen, bei der jede Änderung und/oder Anpassung des Kl-basierten Informationsverarbeitungssystems direkt im Hinblick auf einen Effekt auf die Robustheit bewertet wird und je nach Ergebnis beibehalten oder verworfen wird. Hierdurch kann die Entwicklung eines robusten Kl-basierten Informationsverarbeitungssystems auf effiziente Weise durchgeführt werden.

In einer Ausführungsform ist vorgesehen, dass die mindestens eine zu dem Kl-basierten Informationsverarbeitungssystem zugehörige multidimensionale Datenstruktur mittels eines Steuergeräts bereitgestellt wird, in dessen Speicher die multidimensionale Datenstruktur gespeichert ist, wobei die bestimmten Differenzwerte durch Abfragen und/oder Abrufen der bestimmten Differenzwerte aus dem Speicher des Steuergeräts empfangen werden. Insbesondere werden die bestimmten Differenzwerte in Abhängigkeit zumindest der Dimensionen Datensatz, Datenaugmentierungsdefinition(en) und Differenzmaßdefinition(en) abgefragt und/oder abgerufen und empfangen. Die Vorrichtung kann insbesondere ein solches Steuergerät umfassen oder bei Bedarf mit einem solchen verbunden werden.

Weitere Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Es wird auch eine Verwendung eines mittels des in dieser Offenbarung beschriebenen Verfahrens oder mittels einer in dieser Offenbarung beschriebenen Vorrichtung als robust bewerteten, insbesondere zertifizierten, Kl-basierten Informationsverarbeitungssystems zur robusten Auswertung von Sensordaten mindestens eines Sensors, insbesondere mindestens eines Sensors eines Kraftfahrzeugs, vorgeschlagen.

Ferner wird insbesondere auch ein Steuergerät geschaffen, umfassend einen Speicher, in dem mindestens ein mittels eines Verfahrens nach einer der beschriebenen Ausführungsformen als robust bewertetes, insbesondere zertifiziertes, Kl-basiertes Informationsverarbeitungssystem zur robusten Auswertung von Sensordaten mindestens eines Sensors, hinterlegt ist.

Weiter wird insbesondere auch ein Computerprogramm geschaffen, umfassend Befehle, die bei der Ausführung des Computerprogramms durch einen Computer diesen veranlassen, die Verfahrensschritte des Verfahrens nach einem beliebigen der beschriebenen Ausführungsformen auszuführen.

Darüber hinaus wird auch ein Datenträgersignal geschaffen, das ein solches Computerprogramm überträgt.

Ist eine multidimensionale Datenstruktur für ein zu bewertendes und/oder zertifizierendes Kl-basiertes Informationsverarbeitungssystem nicht vorhanden bzw. kann diese nicht bereitgestellt werden, so kann das Erzeugen einer multidimensionalen Datenstruktur für das Kl-basierte Informationsverarbeitungssystem insbesondere mittels des nachfolgend beschriebenen Verfahrens zum Bereitstellen einer Datenbasis zur Robustheitsbeurteilung mindestens eines Kl-basierten Informationsverarbeitungssystems erfolgen.

Das Erzeugen erfolgt mittels eines Verfahren zum Bereitstellen einer Datenbasis zur Robustheitsbeurteilung mindestens eines Kl-basierten Informationsverarbeitungssystems, wobei als Eingangsparameter mindestens ein Kl-basiertes Informationsverarbeitungssystem, mindestens ein Datensatz, mindestens eine Datenaugmentierungsdefinition und mindestens eine Differenzmaßdefinition empfangen werden, wobei basierend auf den Eingangsparametern eine multidimensionale Datenstruktur erzeugt wird, wobei die Dimensionen und Wertebereiche der Dimensionen der multidimensionalen Datenstruktur durch die empfangenen Eingangsparameter festgelegt sind, und wobei jeder Datenpunkt der multidimensionalen Datenstruktur einen mittels des mindestens einen definierten Differenzmaßes bestimmten Differenzwert umfasst, der bestimmt wird, indem das mindestens eine definierte Differenzmaß zwischen Ausgangsdaten gebildet wird, die von dem mindestens einen Kl-basierten Informationsverarbeitungssystem jeweils für Daten des mindestens einen Datensatzes und für dieselben mittels der mindestens einen definierten Datenaugmentierung augmentierten Daten erzeugt wurden, und wobei die erzeugte multidimensionale Datenstruktur bereitgestellt wird, sodass eine Robustheit des mindestens einen Kl-basierten Informationsverarbeitungssystems basierend auf den von der multidimensionalen Datenstruktur umfassten Differenzwerten beurteilt werden kann.

Zum Erzeugen wird das Verfahren beispielsweise mittels einer Vorrichtung zum Bereitstellen einer Datenbasis zur Robustheitsbeurteilung mindestens eines Kl-basierten Informationsverarbeitungssystems ausgeführt, umfassend eine Datenverarbeitungseinrichtung, wobei die Datenverarbeitungseinrichtung dazu eingerichtet ist, als Eingangsparameter mindestens ein Kl-basiertes Informationsverarbeitungssystem, mindestens einen Datensatz, mindestens eine Datenaugmentierungsdefinition und mindestens eine Differenzmaßdefinition zu empfangen, und basierend auf den Eingangsparametern eine multidimensionale Datenstruktur zu erzeugen, wobei die Dimensionen und Wertebereiche der Dimensionen der multidimensionalen Datenstruktur durch die empfangenen Eingangsparameter festgelegt sind, und wobei jeder Datenpunkt der multidimensionalen Datenstruktur einen mittels des mindestens einen definierten Differenzmaßes bestimmten Differenzwert umfasst, der bestimmt wird, indem das mindestens eine definierte Differenzmaß zwischen Ausgangsdaten gebildet wird, die von dem Kl-basierten Informationsverarbeitungssystem jeweils für Daten des mindestens einen Datensatzes und für dieselben mittels der mindestens einen definierten Datenaugmentierung augmentierten Daten erzeugt wurden, und die erzeugte multidimensionale Datenstruktur bereitzustellen, sodass eine Robustheit des mindestens einen Kl-basierten Informationsverarbeitungssystems basierend auf den von der multidimensionalen Datenstruktur umfassten Differenzwerten beurteilt werden kann.

Das Verfahren und die Vorrichtung zum Bereitstellen einer Datenbasis zur Robustheitsbeurteilung mindestens eines Kl-basierten Informationsverarbeitungssystems ermöglichen es, eine Datenbasis zur Robustheitsbeurteilung mindestens eines Kl-basierten Informationsverarbeitungssystems bereitzustellen. Es wird hierzu eine multidimensionale Datenstruktur erzeugt, in der als Datenpunkte jeweils Differenzwerte hinterlegt werden. Die Dimensionen der multidimensionalen Datenstruktur, die insbesondere auch als Hypercube bezeichnet werden kann, umfassen zumindest die Dimensionen: Kl-basiertes Informationsverarbeitungssystem, Datensatz, Datenaugmentierung und Differenzmaß. Daher werden zum Erzeugen der multidimensionalen Datenstruktur mindestens ein Kl-basiertes Informationsverarbeitungssystem, mindestens ein Datensatz, mindestens eine Datenaugmentierungsdefinition und mindestens eine Differenzmaßdefinition empfangen. Für jede Kombination dieser Dimensionen, das heißt für jede mögliche Ausprägung innerhalb der Dimensionen, wird mittels des jeweiligen Differenzmaßes ein Differenzwert berechnet und für den zugehörigen Datenpunkt hinterlegt. Der über die jeweilige Differenzmaßdefinition definierte Differenzwert wird hierbei aus den Ausgangsdaten bestimmt, die von dem mindestens einen KI-basierten Informationsverarbeitungssystem jeweils für (nicht augmentierte) Daten des Datensatzes und für augmentierte Daten erzeugt werden. Die augmentierten Daten werden mittels des für den Datenpunkt über die Datenaugmentierungsdefinition definierte Datenaugmentierung erzeugt. Anders ausgedrückt ergibt sich für jeden Datenpunkt innerhalb der multidimensionalen Datenstruktur eine Kombination zumindest aus den Dimensionen KI-basiertes Informationsverarbeitungssystem, Datensatz, Datenaugmentierungsdefinition und Differenzmaßdefinition, das heißt für jeden Datenpunkt sind ein KI-basiertes Informationsverarbeitungssystem, ein Datensatz, eine Datenaugmentierung (bzw. ein Datenaugmentierungsverfahren) und ein Differenzmaß definiert. Ausgehend hiervon werden für den Datenpunkt Daten des Datensatzes mittels der Datenaugmentierung augmentiert (z.B. gestört) und mittels des Differenzmaßes ein Differenzwert zwischen den nicht augmentierten Daten und den augmentierten Daten des Datensatzes durch Anwendung des Kl-basierten Informationsverarbeitungssystems auf die Daten bestimmt. Der bestimmte Differenzwert wird in dem Datenpunkt hinterlegt. Dieses Vorgehen wird für alle Datenpunkte durchgeführt, bis für jeden der Datenpunkte innerhalb der multidimensionalen Datenstruktur ein Differenzwert bestimmt und hinterlegt wurde. Die Differenzwerte können später jederzeit aus der Datenstruktur gezielt, das heißt durch Vorgabe der Kombination aus zumindest dem Kl-basierten Informationsverarbeitungssystem, dem Datensatz, der Datenaugmentierungsdefinition und der Differenzmaßdefinition wieder abgerufen werden, sodass eine Robustheit des mindestens einen Kl-basierten Informationsverarbeitungssystems basierend auf den von der multidimensionalen Datenstruktur umfassten Differenzwerten beurteilt werden kann. Dies ermöglicht es, jederzeit, das heißt auch im Nachhinein, eine Robustheit zu bestimmen und hierzu beispielweise nur eine Teilmenge der multidimensionalen Datenstruktur zu betrachten. Hierdurch kann das Bestimmen und Bewerten der Robustheit des mindestens einen Kl-basierten Informationsverarbeitungssystems, insbesondere im Hinblick auf eine Flexibilität, verbessert werden.

Ein Vorteil des Verfahrens und der Vorrichtung zum Bereitstellen einer Datenbasis zur Robustheitsbeurteilung mindestens eines Kl-basierten Informationsverarbeitungssystems ist, dass ein Messen und Bewerten der Robustheit eines Kl-basierten Informationsverarbeitungssystems auch ohne das Kl-basierte Informationsverarbeitungssystem, das heißt ohne eine Modellbeschreibung (Struktur, Parameter, Aktivierungsfunktionen etc.), und ohne den mindestens einen Datensatz erfolgen kann. Dies ist insbesondere von Vorteil, wenn das Kl-basierte Informationsverarbeitungssystem und/oder gegebenenfalls sensible Daten selbst nicht veröffentlicht oder bereitgestellt werden sollen. Beispielsweise ermöglicht das Verfahren zum Bereitstellen der Datenbasis ein Zertifizieren eines Kl-basierten Informationsverarbeitungssystems, ohne dass das Kl-basierte Informationsverarbeitungssystem selbst Teil des Zertifizierungsverfahrens sein muss. Hierzu muss lediglich die multidimensionale Datenstruktur bereitgestellt werden.

Das Verfahren zum Bereitstellen einer Datenbasis zur Robustheitsbeurteilung mindestens eines Kl-basierten Informationsverarbeitungssystems kann auch Teil des Verfahrens zum Bewerten und Zertifizieren einer Robustheit eines Kl-basierten Informationsverarbeitungssystems sein.

Beim Empfangen im Rahmen des Verfahrens zum Bereitstellen einer Datenbasis zur Robustheitsbeurteilung mindestens eines Kl-basierten Informationsverarbeitungssystems werden insbesondere die Strukturbeschreibung und Parameter des Kl-basierten Informationsverarbeitungssystems empfangen. Das Kl-basierte Informationsverarbeitungssystem wird dann mittels der Datenverarbeitungseinrichtung auf den Daten und den augmentierten Daten ausgeführt.

Teile der Datenverarbeitungseinrichtung der Vorrichtung zum Bereitstellen einer Datenbasis zur Robustheitsbeurteilung mindestens eines Kl-basierten Informationsverarbeitungssystems können einzeln oder zusammengefasst als eine Kombination von Hardware und Software ausgebildet sein, beispielsweise als Programmcode, der auf einem Mikrocontroller oder Mikroprozessor ausgeführt wird.

In einer Ausführungsform des Verfahrens und der Vorrichtung zum Bereitstellen einer Datenbasis zur Robustheitsbeurteilung mindestens eines Kl-basierten Informationsverarbeitungssystems ist vorgesehen, dass das Bereitstellen ein Bereitstellen einer Schnittstelle zum gezielten Abrufen von Datenpunkten der multidimensionalen Datenstruktur umfasst. Eine solche Schnittstelle ermöglicht insbesondere ein Abrufen bzw. Abfragen von einzelnen Datenpunkten oder Bereichen bzw. Mengen von Datenpunkten in Abhängigkeit von Kombinationen aus zumindest einem Kl-basierten Informationsverarbeitungssystem, einem Datensatz, einer Datenaugmentierungsdefinition und einer Differenzmaßdefinition. Hierdurch können flexibel Robustheiten (insbesondere Robustheitswerte) bestimmt und beispielsweise über mehrere Datenpunkte oder mehrere Datenaugmentierungen bzw. Datenaugmentierungsverfahren gemittelt werden. Das Verfahren zum Bewerten und Zertifizieren einer Robustheit eines Kl-basierten Informationsverarbeitungssystems kann insbesondere mittels dieser Schnittstelle arbeiten.

Es kann hierbei weiter vorgesehen sein, dass die Schnittstelle dazu eingerichtet ist, dass eine Abfrage gezielt durch weitere Parameter eingeschränkt werden kann. Mögliche Abfragen unter Vorgabe der entsprechenden Parameter können hierbei beispielsweise die folgenden sein:
- Abfragen von konkreten Einträgen (Differenzwerten) der multidimensionalen Datenstruktur,
- Abfragen von Maximal-, Minimal- oder Durchschnittswerten über Ausschnitte der multidimensionalen Datenstruktur,
- Abfragen von Varianzen, Bandbreiten etc. der Differenzwerte in Ausschnitten der multidimensionalen Datenstruktur,
- Abfragen von gewichteten Summen (Integralen) über Ausschnitte der multidimensionalen Datenstruktur,
- Abfragen von Histogrammen über die Differenzwerte und/oder die vorgenannten Werte,
- Abfragen über funktionale Verläufe der Differenzwerte und/oder der vorgenannten Werte unter Variation von Ausschnittparametern,
- Abfragen von Heatmaps oder anderen Datenvisualisierunsverfahren über die Differenzwerte und/oder die vorgenannten Werte oder Verläufe,
- Abfragen von zeitlichen Verläufen der Differenzwerte und/oder der vorgenannten Werte im Falle eines zeitlich sequentiellen Datensatzes.

In einer Ausführungsform des Verfahrens und der Vorrichtung zum Bereitstellen einer Datenbasis zur Robustheitsbeurteilung mindestens eines Kl-basierten Informationsverarbeitungssystems ist vorgesehen, dass das Bereitstellen ein Übermitteln der multidimensionalen Datenstruktur an einen Zertifizierungsdienstleister und/oder einen Verwender des Kl-basierten Informationsverarbeitungssystems und/oder ein Einladen der multidimensionalen Datenstruktur in einen Speicher von mindestens einem Steuergerät umfasst. Hierdurch kann auch im Nachhinein, das heißt nach einer Auslieferung und Verwendung bzw. während der gesamten Nutzungsdauer des mindestens einen Kl-basierten Informationsverarbeitungssystems im Feld weiterhin bzw. erneut eine Robustheit, beispielsweise mittels neuer oder geänderter Robustheitsmaße, bestimmt werden, ohne dass hierfür erneut die Differenzwerte bestimmt werden müssen.

In einer Ausführungsform des Verfahrens und der Vorrichtung zum Bereitstellen einer Datenbasis zur Robustheitsbeurteilung mindestens eines Kl-basierten Informationsverarbeitungssystems ist vorgesehen, dass als Eingangsparameter zusätzlich eine Menge an Unterparametern für die mindestens eine Datenaugmentierungsdefinition empfangen wird, wobei das Erzeugen der multidimensionalen Datenstruktur und/oder das Augmentieren der Daten unter Berücksichtigung der empfangenen Menge an Unterparametern erfolgt. Hierdurch kann die Datenaugmentierung bzw. das oder die Datenaugmentierungsverfahren weiter spezifiziert bzw. parametriert werden. Im Falle einer Helligkeitsvariation in Kamerabildern kann beispielsweise eine Bandbreite an Helligkeitswerten vorgegeben werden, innerhalb derer die Kamerabilder jeweils augmentiert, das heißt in ihrer Helligkeit variiert, werden sollen. Für jeden der Unterparameter, die berücksichtigt werden sollen, erweitert sich die multidimensionale Datenstruktur entsprechend. Bei einer Helligkeitsvariation mit drei Unterparametern (z.B. -20 %, 0 und +20 %) gibt es in der Dimension Datenaugmentierungsdefinition dann für die Helligkeitsvariation entsprechend drei Ausprägungen. Ein weiteres Beispiel ist das Angeben von verschiedenen Rauschparametern (z.B. Zielwert für ein Signal-zu-Rauschverhältnis etc.).

In einer Ausführungsform des Verfahrens und der Vorrichtung zum Bereitstellen einer Datenbasis zur Robustheitsbeurteilung mindestens eines Kl-basierten Informationsverarbeitungssystems ist vorgesehen, dass als Eingangsparameter zusätzlich eine Menge an Filterkriterien für einzelne der Eingangsparameter empfangen wird, wobei das Erzeugen der multidimensionalen Datenstruktur unter Berücksichtigung der empfangenen Menge an Filterkriterien erfolgt. Hierdurch kann gezielt eine multidimensionale Datenstruktur geschaffen werden, die die Filterkriterien berücksichtigt. Hierdurch lassen sich insbesondere bestimmte Testszenarien abbilden bzw. vorbereiten. Filterkriterien können beispielsweise Tags an den Daten sein, die ein Binning und/oder Auflösen einer bestimmten Robustheit an den Kriterien zulassen. Zum Beispiel können dies Kontextwerte (z.B. für die Kontexte Stadt, Land, Corner Case, Festtag, großes Event in der Nähe, Wetter,...) oder Dateneigenschaften (z.B. eine Verschmutzung, Motion Blurr, Blinding...) sein.

In einer Ausführungsform des Verfahrens und der Vorrichtung zum Bereitstellen einer Datenbasis zur Robustheitsbeurteilung mindestens eines Kl-basierten Informationsverarbeitungssystems ist vorgesehen, dass als Eingangsparameter zusätzlich eine Auswahl an statistischen Verteilungsfunktionen für Parameterverteilungen für die mindestens eine Datenaugmentierungsdefinition empfangen wird, wobei das Erzeugen der multidimensionalen Datenstruktur unter Berücksichtigung der Auswahl an statistischen Verteilungsfunktionen für Parameterverteilungen erfolgt. Hierdurch können statistische Verteilungen bei der Augmentierung (z.B. Störung) der Daten des Datensatzes berücksichtigt werden. Beispielsweise kann für eine Datenaugmentierung, die eine Helligkeitsvariation in Bildern beinhaltet, eine Verteilungsfunktion übergeben werden, aus der beim Erzeugen der multidimensionalen Datenstruktur statistisch gesampelt wird (z.B. 10 Samples aus folgender Verteilung: [-30 % bis -10 %] mit p=0.3, [-10 % bis +10 %] mit p=0.5 und [+10 % bis +30 %] mit p=0.2).

In einer Ausführungsform des Verfahrens und der Vorrichtung zum Bereitstellen einer Datenbasis zur Robustheitsbeurteilung mindestens eines Kl-basierten Informationsverarbeitungssystems ist vorgesehen, dass als Eingangsparameter zusätzlich eine Auswahl an Verteilungen für Kombinationen von Parametern von Datenaugmentierungsdefinitionen und Daten des Datensatzes empfangen wird, wobei das Erzeugen der multidimensionalen Datenstruktur unter Berücksichtigung der empfangenen Menge an Verteilungen für die Kombinationen der Parameter erfolgt. Hierdurch können Verteilungen für die Kombinationen berücksichtigt werden. Eine Verteilung kann beispielsweise eine 'Exposure' zu den einzelnen Eingangsdatenströmen oder Tags sein, die es erlaubt, "gegen" die Verteilung zu aggregieren (d.h. es wird über (die Einzeldaten)x(Exposure) summiert). Auf diese Weise kann ein "realistisch erwartbares Robustheitsrisiko" errechnet werden.

In einer Ausführungsform des Verfahrens und der Vorrichtung zum Bereitstellen einer Datenbasis zur Robustheitsbeurteilung mindestens eines Kl-basierten Informationsverarbeitungssystems ist vorgesehen, dass als Eingangsparameter eine Auswahl für eine Relevanz einzelner Datenpunkte empfangen wird, wobei das Erzeugen der multidimensionalen Datenstruktur unter Berücksichtigung der empfangenen Relevanz erfolgt. Hierdurch können besonders relevante Datenpunkte, das heißt besonders relevante Kombinationen der Eingangsparameter, gekennzeichnet werden, sodass für diese Kombinationen Datenpunkte und Differenzwerte erzeugt bzw. bestimmt werden. Dies ist insbesondere von Vorteil, wenn eine Prüfung der Robustheit für bestimmte Kombinationen der Eingangsparameter beispielsweise gesetzlich vorgeschrieben ist oder sich bei der Beurteilung der Robustheit bewährt hat.

In einer Ausführungsform des Verfahrens und der Vorrichtung zum Bereitstellen einer Datenbasis zur Robustheitsbeurteilung mindestens eines Kl-basierten Informationsverarbeitungssystems ist vorgesehen, dass zusätzlich für jeden Datenpunkt die jeweils von dem mindestens einen Kl-basierten Informationsverarbeitungssystem erhaltenen Ergebnisse in der multidimensionalen Datenstruktur hinterlegt werden. Hierdurch können auch die für die Daten und die augmentierten Daten erzeugten Ergebnisse nachträglich noch verwendet werden. Insbesondere müssen bei einer Erweiterung der multidimensionalen Datenstruktur um weitere Datenaugmentierungen nicht ein weiteres Mal Ergebnisse für die nicht augmentierten Daten erzeugt werden, sondern es kann direkt auf die bereits in der multidimensionalen Datenstruktur hinterlegten Ergebnisse zurückgegriffen werden. Hierdurch können Rechenleistung und Rechenzeit eingespart werden.

In einer Ausführungsform des Verfahrens und der Vorrichtung zum Bereitstellen einer Datenbasis zur Robustheitsbeurteilung mindestens eines Kl-basierten Informationsverarbeitungssystems ist vorgesehen, dass die multidimensionale Datenstruktur nach dem Bereitstellen durch Einfügen von mindestens einer weiteren Dimension und/oder durch Erweitern eines Wertebereiches mindestens einer Dimension erweitert wird, wobei die erweiterte multidimensionale Datenstruktur bereitgestellt wird. Hierdurch können auch nachträglich weitere oder neue Datenaugmentierungsverfahren, weitere oder neue Datensätze und/oder weitere oder neue Differenzmaße berücksichtigt werden. Insbesondere können die bereits vorhandenen Datenpunkte weiterverwendet werden und müssen nicht erneut berechnet werden, da eine Erweiterung der multidimensionalen Datenstruktur ohne Weiteres möglich ist.

In einer Ausführungsform des Verfahrens und der Vorrichtung zum Bereitstellen einer Datenbasis zur Robustheitsbeurteilung mindestens eines Kl-basierten Informationsverarbeitungssystems ist vorgesehen, dass das mindestens eine KI-basierte Informationsverarbeitungssystem eine Funktion für das automatisierte Fahren eines Kraftfahrzeugs und/oder für eine Fahrerassistenz des Kraftfahrzeugs und/oder für eine Umfelderfassung und/oder Umfeldwahrnehmung bereitstellt.

Es kann prinzipiell jedoch auch vorgesehen sein, dass das Verfahren und die Vorrichtung bei anderen Anwendungen eingesetzt werden. Dies können beispielsweise eine automatisierte Flottensteuerung, eine Innenraumüberwachung, eine Fahrerbeobachtung, eine Produktionssteuerung, eine Videoüberwachung, Robotikanwendungen, ein automatisiertes Fliegen, automatisierte Schienenfahrzeuge oder Anwendungen in der Raumfahrt sein.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Vorrichtung zum Bewerten und Zertifizieren einer Robustheit eines Kl-basierten Informationsverarbeitungssystems;
- Fig. 2: eine schematische Darstellung einer Ausführungsform einer Vorrichtung zum Bereitstellen einer Datenbasis zur Robustheitsbeurteilung mindestens eines Kl-basierten Informationsverarbeitungssystems, mit der eine multidimensionale Datenstruktur für das offenbarte Verfahren erzeugt werden kann;
- Fig. 3: ein schematisches Flussdiagramm zur Verdeutlichung einer Ausführungsform des Verfahrens zum Bereitstellen einer Datenbasis zur Robustheitsbeurteilung mindestens eines Kl-basierten Informationsverarbeitungssystems, mit dem eine multidimensionale Datenstruktur für das offenbarte Verfahren erzeugt werden kann;
- Fig. 4: ein schematisches Ablaufdiagramm einer Ausführungsform des Verfahrens zum Bewerten und Zertifizieren einer Robustheit eines Kl-basierten Informationsverarbeitungssystems.

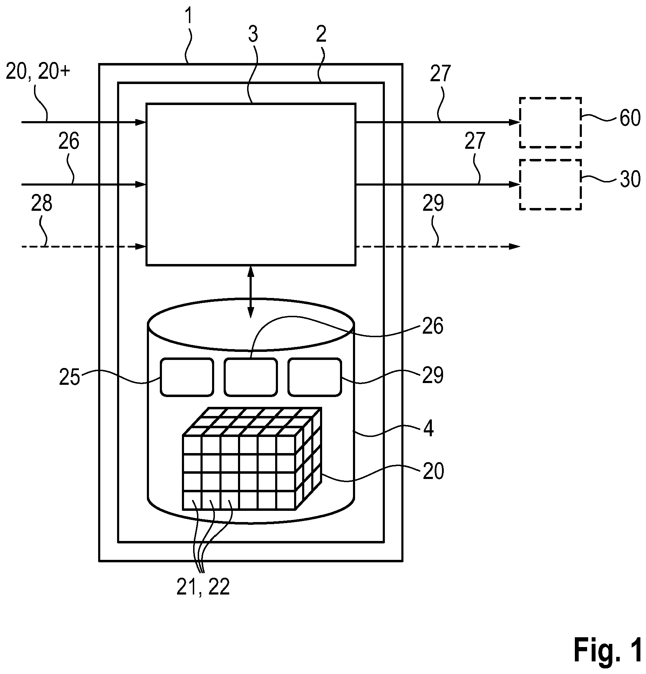

In Fig. 1 ist eine schematische Darstellung einer Ausführungsform der Vorrichtung 1 zum Bewerten und Zertifizieren einer Robustheit eines Kl-basierten Informationsverarbeitungssystems gezeigt. Das Kl-basierte Informationsverarbeitungssystem kann beispielsweise ein trainiertes tiefes Neuronales Netz sein. Die Vorrichtung 1 umfasst eine Datenverarbeitungseinrichtung 2. Die Datenverarbeitungseinrichtung 2 umfasst eine Recheneinrichtung 3 und einen Speicher 4. Die Vorrichtung 1 ist insbesondere dazu eingerichtet, das in dieser Offenbarung beschriebene Verfahren zum Bewerten und Zertifizieren einer Robustheit eines Kl-basierten Informationsverarbeitungssystems auszuführen.

Es ist vorgesehen, dass das Kl-basierte Informationsverarbeitungssystem eine Funktion für das automatisierte Fahren eines Kraftfahrzeugs und/oder für eine Fahrerassistenz des Kraftfahrzeugs und/oder für eine Umfelderfassung und/oder Umfeldwahrnehmung oder für eine andere Anwendung bereitstellt.

Die Datenverarbeitungseinrichtung 2 ist dazu eingerichtet ist, zugehörig zu einem zu überprüfenden, das heißt zu bewertenden und/oder zu zertifizierenden, Kl-basierten Informationsverarbeitungssystem mindestens eine multidimensionale Datenstruktur 20 zu empfangen. Insbesondere wird eine multidimensionale Datenstruktur 20 empfangen. Die empfangene multidimensionale Datenstruktur 20 wird in dem Speicher 4 hinterlegt (schematisch als Würfel dargestellt). In der mindestens einen multidimensionalen Datenstruktur 20 sind jeweils zumindest mittels mindestens eines Differenzmaßes bestimmte Differenzwerte 22 für Differenzen zwischen Ausgangsdaten des Kl-basierten Informationsverarbeitungssystems, die für Daten und augmentierte Daten erhalten wurden, in Abhängigkeit zumindest der Dimensionen Datensatz, Datenaugmentierungsdefinition(en) und Differenzmaßdefinition(en) hinterlegt.

Zum Bewerten und/oder Zertifizieren des Kl-basierten Informationsverarbeitungssystems kann die Recheneinrichtung 3 auf die in einzelnen Datenpunkten 21 der multidimensionalen Datenstruktur 20, die jeweils mit einer Kombination der vorgenannten Dimensionen korrespondieren, hinterlegten Differenzwerte 22 zurückgreifen.

Aus zumindest einer Auswahl, das heißt einer Teilmenge, der Differenzwerte 22 bestimmt die Datenverarbeitungseinrichtung 2, insbesondere die Recheneinrichtung 3, mindestens eine Robustheit 25 des Kl-basierten Informationsverarbeitungssystems. Hierzu können beispielsweise ausgehend von den einzelnen Differenzwerten 22 Maximalwerte oder gewichtete oder ungewichtete Durchschnittswerte bestimmt werden. Ferner ist es möglich, dass die Differenzwerte 22 entlang einzelner oder mehrerer der vorgenannten Dimensionen statistisch ausgewertet werden, beispielsweise indem statistische Kennzahlen von Verteilungen oder Histogramme etc. bestimmt und als Maß für die Robustheit 25 verwendet werden.

Die mindestens eine bestimmte Robustheit 25 drückt sich insbesondere in Form von mindestens einem Robustheitswert aus. Die mindestens eine bestimmte Robustheit 25 wird mittels der Datenverarbeitungseinrichtung 2, insbesondere mittels der Recheneinrichtung 3, mit mindestens einer Robustheitsanforderung 26 verglichen. Die mindestens eine Robustheitsanforderung 26 wird der Vorrichtung 1 vorgegeben bzw. zugeführt und von der Datenverarbeitungseinrichtung 2, insbesondere von der Recheneinrichtung 3, empfangen und im Speicher 4 abgelegt.

Basierend auf einem Vergleichsergebnis werden von der Datenverarbeitungseinrichtung 2, insbesondere von der Recheneinrichtung 3, verschiedene Aktionen durchgeführt. Entweder wird das Kl-basierte Informationsverarbeitungssystem verworfen, mit einer geänderten multidimensionalen Datenstruktur 20+ erneut bewertet oder als robust zertifiziert. Im ersten Fall wird beispielsweise ein entsprechendes Ergebnissignal 27 ausgeben, das eine Information beinhaltet, dass das Kl-basierte Informationsverarbeitungssystem verworfen wird bzw. verworfen werden soll. Das Ergebnissignal 27 kann beispielsweise einem System 60 zugeführt werden, das Kl-basierte Informationsverarbeitungssysteme, beispielsweise Neuronale Netze, im Hinblick auf eine Robustheit optimiert (z.B. mittels AutoML). Im zweiten Fall wird ebenfalls ein entsprechendes Ergebnissignal 27 ausgegeben, das eine Information beinhaltet, dass das Kl-basierte Informationsverarbeitungssystem mit einer geänderten multidimensionalen Datenstruktur 20+ erneut bewertet werden soll. In der Folge wird der Vorrichtung 1 eine solche geänderte multidimensionale Datenstruktur 20+ zugeführt und die voranstehend beschriebenen Maßnahmen werden mit der geänderten multidimensionalen Datenstruktur 20+ wiederholt. Im dritten Fall wird ebenfalls ein entsprechendes Ergebnissignal 27 ausgegeben, das eine Information über die Zertifizierung des Kl-basierten Informationsverarbeitungssystems beinhaltet. Dieses Ergebnissignal 27 bzw. die Information über die Zertifizierung des KI-basierten Informationsverarbeitungssystems kann beispielsweise in einen Speicher mindestens eines Steuergerätes 30 geladen werden, in dem das Kl-basierte Informationsverarbeitungssystem ausgeführt werden soll.

Es kann vorgesehen sein, dass die Information über die Zertifizierung des Kl-basierten Informationsverarbeitungssystems ein Echtheitszertifikat, beispielsweise in Form eines Codes oder Schlüssels umfasst.

Es ist vorgesehen sein, dass das Kl-basierte Informationsverarbeitungssystem in dem Steuergerät nur aktiviert wird bzw. ausgeführt wird, wenn eine Zertifizierung nachgewiesen ist, beispielsweise indem das Vorliegen einer Robustheitszertifizierung überprüft wird. Es ist hierzu vorgesehen, dass eine Information in dem Speicher des Steuergeräts geändert oder hinterlegt wird, die eine Erlaubnis zur Aktivierung bzw. Verwendung des Kl-basierten Informationsverarbeitungssystems, beinhaltet. Es ist hierbei vorgesehen, dass die Aktivierung mittels eines entsprechenden, eine Zertifizierung beinhaltenden, Ergebnissignals 27 erfolgt, das dem Steuergerät 30 zugeführt wird, und das die Aktivierung in dem Steuergerät bewirkt.

Es kann auch vorgesehen sein, dass das Kl-basierte Informationsverarbeitungssystem, beispielsweise in Form von einer Strukturbeschreibung und/oder Parametern, nach einer Zertifizierung in einen Speicher von mindestens einem Steuergerät 30 eingeladen wird. Das Steuergerät 30 ist beispielsweise ein Steuergerät 30 eines Kraftfahrzeugs.

Es kann vorgesehen sein, dass zum Bereitstellen einer geänderten multidimensionalen Datenstruktur 20+ mindestens eine der folgenden Dimensionen geändert und/oder erweitert wird: Datensatz, Datenaugmentierungsdefinition, Differenzmaßdefinition.

Es kann vorgesehen sein, dass eine Struktur und/oder Parameter und/oder ein Training des Kl-basierten Informationsverarbeitungssystems basierend auf dem Vergleichsergebnis geändert wird, wobei das geänderte KI-basierte Informationsverarbeitungssystem erneut bewertet und/oder zertifiziert wird.

Es kann vorgesehen sein, dass eine Menge aus mehreren unterschiedlichen Kl-basierten Informationsverarbeitungssystemen bewertet wird, wobei dasjenige KI-basierte Informationsverarbeitungssystem, insbesondere zum Einladen und/oder Anwenden in einem Steuergerät, insbesondere eines Steuergeräts eines Kraftfahrzeugs, ausgewählt wird, das die mindestens eine Robustheitsanforderung 26 hinsichtlich zumindest eines Optimierungskriteriums 28 am besten erfüllt. Hierbei kann vorgesehen sein, dass der Vorrichtung 1 eine multidimensionale Datenstruktur 20 zugeführt wird, die für die mehreren unterschiedlichen Kl-basierten Informationsverarbeitungssysteme erzeugt wurde, das heißt zusätzlich eine Dimension "KI-basiertes Informationsverarbeitungssystem" umfasst, die einen mit einer Anzahl der Kl-basierten Informationsverarbeitungssysteme korrespondierenden Wertebereich aufweist. Das Optimierungskriterium 28 wird der Vorrichtung 1 ebenfalls zugeführt. Ein Beispiel für ein Optimierungskriterium 28 ist beispielsweise ein möglichst großer Abstand eines Vergleichsergebnisses 29 zu der mindestens einen Robustheitsanforderung 26.

Es kann vorgesehen sein, dass das Vergleichsergebnis 29 für jede der mindestens einen Robustheitsanforderungen 26 ausgegeben wird.

Es kann vorgesehen sein, dass zusätzlich mindestens ein geändertes KI-basiertes Informationsverarbeitungssystem bewertet wird, wobei die jeweils bestimmten Robustheiten 25 des Kl-basierten Informationsverarbeitungssystems und des mindestens einen geänderten Kl-basierten Informationsverarbeitungssystems miteinander verglichen werden, und wobei basierend auf einem Vergleichsergebnis der Robustheiten eine Selektionsentscheidung für das Kl-basierte Informationsverarbeitungssystem oder das mindestens eine geänderte Kl-basierte Informationsverarbeitungssystem getroffen wird. Hierzu umfasst die bereitgestellte und der Vorrichtung 1 zugeführte multidimensionale Datenstruktur 20 Differenzwerte 22 sowohl für das Kl-basierte Informationsverarbeitungssystem als auch das mindestens eine geänderte Kl-basierte Informationsverarbeitungssystem. Insbesondere werden zum Vergleichen der Robustheiten 25 bestimmte Robustheitswerte miteinander verglichen. Drückt sich eine erhöhte Robustheit 25 beispielsweise in einem größeren Robustheitswert aus, so wird dasjenige KI-basierte Informationsverarbeitungssystem ausgewählt, dass den größeren Robustheitswert aufweist.

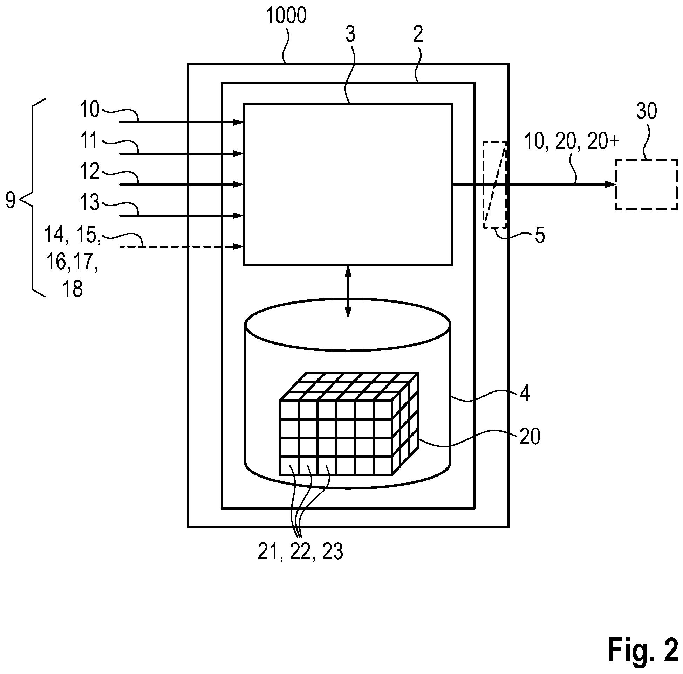

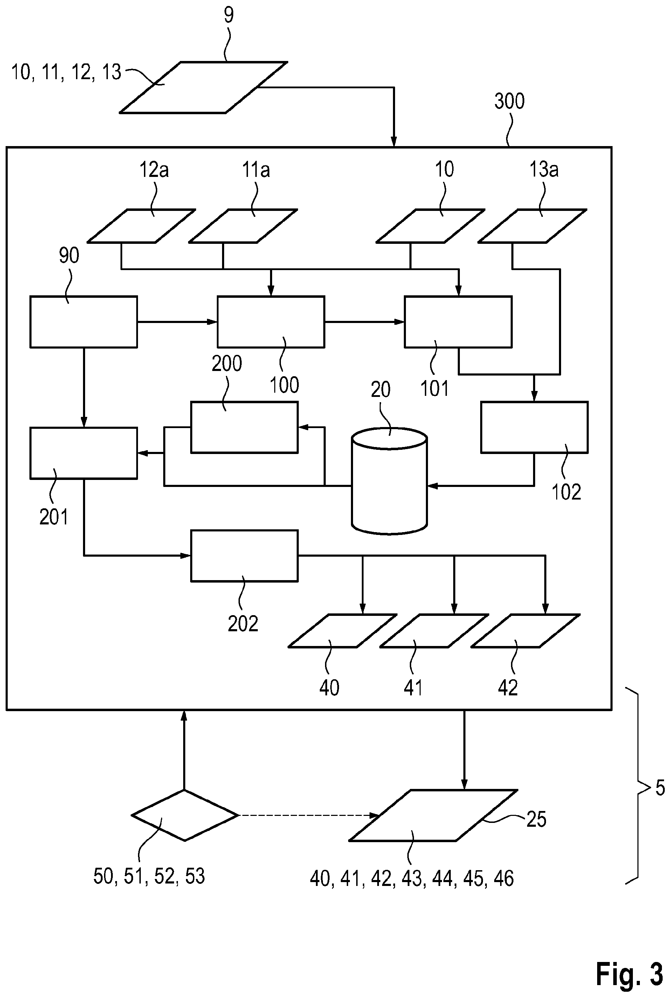

Ist eine multidimensionale Datenstruktur für ein zu bewertendes und/oder zertifizierendes Kl-basiertes Informationsverarbeitungssystem nicht vorhanden bzw. kann eine solche nicht bereitgestellt werden, so kann das Erzeugen einer multidimensionalen Datenstruktur 20 für das Kl-basierte Informationsverarbeitungssystem alternativ insbesondere mittels der nachfolgend mit Bezug auf die Fig. 2 beschriebene Vorrichtung und das mit Bezug auf die Fig. 3 beschriebene Verfahren erfolgen.

In Fig. 2 ist eine schematische Darstellung einer Ausführungsform einer Vorrichtung 1000 zum Bereitstellen einer Datenbasis zur Robustheitsbeurteilung mindestens eines Kl-basierten Informationsverarbeitungssystems 10 gezeigt, das beispielsweise als trainiertes Neuronales Netz ausgebildet ist. Prinzipiell kann die Vorrichtung 1000 jedoch auch für andere KI-basierte Informationsverarbeitungssysteme 10 verwendet werden. Es ist vorgesehen, dass das KI-basierte Informationsverarbeitungssystem 10 eine Funktion für das automatisierte Fahren eines Kraftfahrzeugs und/oder für eine Fahrerassistenz des Kraftfahrzeugs und/oder für eine Umfelderfassung und/oder Umfeldwahrnehmung oder eine andere Anwendung bereitstellt.

Die Vorrichtung 1000 umfasst eine Datenverarbeitungseinrichtung 2. Die Datenverarbeitungseinrichtung 2 umfasst eine Recheneinrichtung 3 und einen Speicher 4.

Der Datenverarbeitungseinrichtung 2 werden als Eingangsparameter 9 mindestens ein Kl-basiertes Informationsverarbeitungssystem 10 (d.h. im Beispiel mindestens ein Neuronales Netz), mindestens ein Datensatz 11, mindestens eine Datenaugmentierungsdefinition 12 und mindestens eine Differenzmaßdefinition 13 zugeführt, diese werden von der Datenverarbeitungseinrichtung 2 empfangen.

Ein KI-basiertes Informationsverarbeitungssystem 10 umfasst insbesondere eine Strukturbeschreibung sowie Parameter (Gewichtungen, Aktivierungsfunktionen, Filterparameter etc.) des Kl-basierten Informationsverarbeitungssystems 10. Der Datensatz 11 umfasst Daten, beispielsweise zweidimensionale Kamerabilder und/oder andere ein- oder mehrdimensionale Sensordaten von mindestens einem Sensor (Kamera, Lidar, Radar, Ultraschall etc.). Die mindestens eine Datenaugmentierungsdefinition 12 umfasst insbesondere eine Beschreibung mindestens eines Datenaugmentierungsverfahrens, das heißt eine Beschreibung darüber, wie Daten im Rahmen des in dieser Offenbarung beschriebenen Verfahrens augmentiert (z.B. gestört) werden sollen. Die mindestens eine Differenzmaßdefinition umfasst insbesondere eine Beschreibung von mindestens einem Differenzmaß, das heißt eine Beschreibung darüber, wie die nicht augmentierten Daten mit den augmentierten Daten im Rahmen des in dieser Offenbarung beschriebenen Verfahrens verglichen werden sollen bzw. auf welche Weise ein Differenzwert 22 bestimmt werden soll.

Basierend auf den Eingangsparametern 9 wird mittels der Datenverarbeitungseinrichtung 2, insbesondere mittels der Recheneinrichtung 3, eine multidimensionale Datenstruktur 20 erzeugt und im Speicher 4 ablegt, welche in der Fig. 2 schematisch als Würfel dargestellt ist. Die Dimensionen und Wertebereiche der Dimensionen der multidimensionalen Datenstruktur 20 werden bzw. sind durch die empfangenen Eingangsparameter 10, 11, 12, 13 festgelegt (im beschriebenen Beispiel umfasst die multidimensionale Datenstruktur 20 insbesondere vier Dimensionen). Zum Erzeugen der multidimensionalen Datenstruktur 20 wird für jede Kombination der Eingangsparameter 10, 11, 12, 13 jeweils ein Datenpunkt 21 erzeugt bzw. bestimmt. Jeder Datenpunkt 21 der multidimensionalen Datenstruktur 20 umfasst hierbei einen mittels des über die mindestens eine Differenzmaßdefinition 13 definierten Differenzmaßes bestimmten Differenzwert 22. Der Differenzwert 22 wird mittels der Datenverarbeitungseinrichtung 2, insbesondere mittels der Recheneinrichtung 3, bestimmt, indem das mindestens eine definierte Differenzmaß zwischen Ausgangsdaten gebildet wird, die von dem mindestens einen Kl-basierten Informationsverarbeitungssystem 10 jeweils für Daten des mindestens einen Datensatzes 11 und für dieselben mittels der über die mindestens eine Datenaugmentierungsdefinition 12 definierten Datenaugmentierung augmentierten Daten erzeugt wurden. Hierzu führt die Datenverarbeitungseinrichtung 2, insbesondere die Recheneinrichtung 3, das Kl-basierte Informationsverarbeitungssystem 10 jeweils auf den Daten und auf den augmentierten Daten aus. In einem einfachen Beispiel, bei dem das KI-basierte Informationsverarbeitungssystem 10 beispielsweise eine Zahl als Ausgangsdatum liefert, kann ein Differenzmaß beispielsweise eine Differenz zwischen den gelieferten Zahlen sein. Werden Vektoren ausgegeben, so können Differenzen zwischen den Vektoren gebildet werden, beispielsweise unter Verwendung eines Skalarprodukts.

Sind die Differenzwerte 22 für alle Datenpunkte 21 der multidimensionalen Datenstruktur 20 bestimmt, so wird die erzeugte multidimensionale Datenstruktur 20 bereitgestellt. Insbesondere wird die multidimensionale Datenstruktur 20 ausgegeben. Mit Hilfe der bereitgestellten multidimensionalen Datenstruktur 20 kann mittels des in dieser Offenbarung beschriebenen Verfahrens zum Bewerten und Zertifizieren eine Robustheit des mindestens einen Kl-basierten Informationsverarbeitungssystems 10 basierend auf den von der multidimensionalen Datenstruktur 20 umfassten Differenzwerten 22 beurteilt werden.

Mit Hilfe der in der Fig. 2 gezeigten Vorrichtung 1000 und des in der Fig. 3 gezeigten Verfahrens können für verschiedene Datensätze 11, verschiedene Datenaugmentierungsverfahren und verschiedene Differenzmaße jeweils Differenzwerte 22 bestimmt werden. Ferner ist es möglich, auch verschiedene KI-basierte Informationsverarbeitungssysteme 10 miteinander zu vergleichen. Jede mögliche Kombination der Eingangsparameter 9 korrespondiert hierbei mit einem Datenpunkt 21, für den ein Differenzwert 22 bestimmt wird. Die Vorrichtung 1000 und das zugehörige Verfahren erlauben daher das Bereitstellen einer umfangreichen und flexibel erweiterbaren Datenbasis zur Robustheitsbeurteilung von mindestens einem Kl-basierten Informationsverarbeitungssystem 10.

Es kann vorgesehen sein, dass das Bereitstellen ein Bereitstellen einer Schnittstelle 5 zum gezielten Abrufen von Datenpunkten 21 der multidimensionalen Datenstruktur 20 umfasst. Die Schnittstelle 5 kann als Hardware und/oder als Software ausgebildet sein.

Es kann vorgesehen sein, dass das Bereitstellen ein Übermitteln der multidimensionalen Datenstruktur 20 an einen Zertifizierungsdienstleister und/oder einen Verwender des KI-basierten Informationsverarbeitungssystems 10 und/oder ein Einladen der multidimensionalen Datenstruktur 20 in einen Speicher von mindestens einem Steuergerät 30 umfasst. Hierdurch kann auch später noch eine Robustheit bewertet und/oder zertifiziert werden.

Es kann vorgesehen sein, dass als Eingangsparameter 9 zusätzlich eine Menge an Unterparametern 14 für die mindestens eine Datenaugmentierungsdefinition 12 empfangen wird, wobei das Erzeugen der multidimensionalen Datenstruktur 20 und/oder das Augmentieren der Daten unter Berücksichtigung der empfangenen Menge an Unterparametern 14 erfolgt. Die Unterparameter 14 umfassen beispielsweise Wertebereiche als Eingangsparameter 9 für eine Datenaugmentierungsfunktion.

Es kann vorgesehen sein, dass als Eingangsparameter 9 zusätzlich eine Menge an Filterkriterien 15 für einzelne der Eingangsparameter 9 empfangen wird, wobei das Erzeugen der multidimensionalen Datenstruktur 20 unter Berücksichtigung der empfangenen Menge an Filterkriterien 15 erfolgt.

Es kann vorgesehen sein, dass als Eingangsparameter 9 zusätzlich eine Auswahl an statistischen Verteilungsfunktionen 16 für Parameterverteilungen für die mindestens eine Datenaugmentierungsdefinition 12 empfangen wird, wobei das Erzeugen der multidimensionalen Datenstruktur 20 unter Berücksichtigung der Auswahl an statistischen Verteilungsfunktionen 16 für Parameterverteilungen erfolgt.

Es kann vorgesehen sein, dass als Eingangsparameter 9 zusätzlich eine Auswahl an Verteilungen 17 für Kombinationen von Parametern von Datenaugmentierungsdefinitionen 12 und Daten des Datensatzes 11 empfangen wird, wobei das Erzeugen der multidimensionalen Datenstruktur 20 unter Berücksichtigung der empfangenen Menge an Verteilungen 17 für die Kombinationen der Parameter erfolgt.

Es kann vorgesehen sein, dass als Eingangsparameter 9 eine Auswahl für eine Relevanz 18 einzelner Datenpunkte 21 empfangen wird, wobei das Erzeugen der multidimensionalen Datenstruktur 20 unter Berücksichtigung der empfangenen Relevanz 18 erfolgt.

Es kann vorgesehen sein, dass zusätzlich für jeden Datenpunkt 21 die jeweils von dem mindestens einen Kl-basierten Informationsverarbeitungssystem 10 erzeugten Ergebnisse 23 in der multidimensionalen Datenstruktur 20 hinterlegt werden.

Es kann vorgesehen sein, dass die multidimensionale Datenstruktur 20 nach dem Bereitstellen durch Einfügen von mindestens einer weiteren Dimension und/oder durch Erweitern eines Wertebereiches mindestens einer Dimension erweitert wird, wobei die erweiterte multidimensionale Datenstruktur 20+ bereitgestellt wird.

Es ist insbesondere vorgesehen, dass das mindestens eine KI-basierte Informationsverarbeitungssystem 10 eine Funktion für das automatisierte Fahren eines Kraftfahrzeugs und/oder für eine Fahrerassistenz des Kraftfahrzeugs und/oder für eine Umfelderfassung und/oder Umfeldwahrnehmung bereitstellt.

In Fig. 3 ist ein schematisches Flussdiagramm zur Verdeutlichung einer Ausführungsform des Verfahrens zum Bereitstellen einer Datenbasis zur Robustheitsbeurteilung mindestens eines Kl-basierten Informationsverarbeitungssystems 10 gezeigt.

Als Eingangsparameter 9 werden mindestens ein KI-basiertes Informationsverarbeitungssystem 10, beispielsweise ein trainiertes Neuronales Netz, mindestens ein Datensatz 11, mindestens eine Datenaugmentierungsdefinition 12 und mindestens eine Differenzmaßdefinition 13 vorgegeben. Ausgehend hiervon sind mindestens ein KI-basiertes Informationsverarbeitungssystem 10a, Daten 11a von mindestens einem Datensatz 11, mindestens ein Datenaugmentierungsverfahren 12a und mindestens ein Differenzmaß 13a vorgegeben.

In einem Verfahrensschritt 100 werden die Daten 11a mittels des mindestens einen Datenaugmentierungsverfahrens 12a augmentiert, z.B. werden die Daten 11a durch Hinzufügen von Rauschen oder mindestens einer adversarialen Störung gestört. Es kann hierbei vorgesehen sein, dass in einem voranstehenden Verfahrensschritt 90 Parameter für die Datenaugmentierung zufällig gewählt werden.

In einem Verfahrensschritt 101 wird das mindestens eine KI-basierte Informationsverarbeitungssystem 10 auf die nicht augmentierten Daten 11a und die jeweils zugehörigen augmentierten Daten angewandt. Die jeweils erhaltenen Ergebnisse werden in einem Verfahrensschritt 102 datumsweise miteinander verglichen und mittels des mindestens einen Differenzmaßes 13a für jedes Datum ein Differenzwert bestimmt. Bei mehreren KI-basierten Informationsverarbeitungssystemen 10, mehreren Datensätzen 11, mehreren Datenaugmentierungsverfahren 12a und/oder mehreren Differenzmaßen 13a wird dies für jede mögliche Kombination durchgeführt, sodass für jede Kombination ein Differenzwert bestimmt wird. Aus den Differenzwerten wird eine multidimensionale Datenstruktur 20 erzeugt, wobei die Differenzwerte jeweils einzelnen Datenpunkten zugeordnet werden, die jeweils einer möglichen Kombination der Eingangsparameter 9 zugeordnet sind.

Die auf diese Weise erzeugte multidimensionale Datenstruktur 20 wird bereitgestellt, beispielsweise in Form einer Schnittstelle 5, mittels derer die Differenzwerte für jede beliebige Kombination der Eingangsparameter 9 abgefragt bzw. abgerufen werden können, sodass eine Robustheit des mindestens einen Kl-basierten Informationsverarbeitungssystems 10 basierend auf den von der multidimensionalen Datenstruktur 20 umfassten Differenzwerten beurteilt werden kann.

Das Bestimmen der Robustheit ist schematisch in den Verfahrensschritten 200 bis 202 dargestellt. Hierbei werden in einem Verfahrensschritt 200 Differenzwerte nach verschiedenen Filterkriterien abgerufen, wobei die Filterkriterien sich aus einem vorgegebenen Robustheitsmaß ergeben. Die abgerufenen Differenzwerte werden in einem Verfahrensschritt 201 aggregiert, beispielsweise indem die abgerufenen Differenzwerte statistisch oder auf andere Weise ausgewertet werden, sodass (statistische) Kennzahlen (z.B. in Form von Key Performance Indikatoren 40, beispielsweise in Form von aggregierten Differenzmaßen, z.B. "durchschnittlicher Fehler" = 0,5 oder 0,4 etc.) berechnet und bereitgestellt werden können (Verteilungsparameter etc.). Das Aggregieren erfolgt hierbei beispielsweise über eine oder mehrere Dimensionsachse(n) der multidimensionalen Datenstruktur 20 hinweg, z.B. über einen kompletten Datensatz 11 und/oder über alle Datenaugmentierungsverfahren 12a und/oder über alle Differenzmaße 13a. Es können dann beispielsweise Maximalwerte und/oder ungewichtete oder gewichtete Durchschnittswerte gebildet und bereitgestellt werden.

In einem Verfahrensschritt 202 können die derart erzeugten Kennzahlen und/oder aggregierten Werte visualisiert werden, beispielsweise indem die Ergebnisse als Graph 41 dargestellt werden, Histogramme 43 gebildet werden, die skalaren Werte 44 dargestellt werden, Heatmaps 45 erzeugt werden und/oder ein Kuchengraphik 46 dargestellt wird. Hierdurch lässt sich eine Robustheit 25 des mindestens einen Kl-basierten Informationsverarbeitungssystems 10 verbessert bewerten und zertifizieren. Ferner kann ein Bericht 42 erstellt und ausgeben werden, der die Ergebnisse einer Robustheitsbewertung und/oder -zertifizierung beinhaltet.

Es ist insbesondere möglich, dass das Bereitstellen der multidimensionalen Datenstruktur 20 ein Bereitstellen einer Schnittstelle 5 zum gezielten Abrufen von Datenpunkten der multidimensionalen Datenstruktur 20 umfasst. Hierbei kann eine Abfrage insbesondere die folgenden Parameter umfassen: gewünschte Filterkriterien 50, gewünschte Achsen- bzw. Dimensionsauswahl 51, gewünschte(s) Aggregationsverfahren 52, gewünschtes Visualisierungsverfahren 53.

Auf diese Weise kann insbesondere ein Metrikgenerator 300 geschaffen werden, mit dem KI-basierte Informationsverarbeitungssysteme 10, beispielsweise trainierte Neuronale Netze, vergleichbar und wiederholbar hinsichtlich einer Robustheit 25 bewertet und zertifiziert werden können.

Das Bereitstellen der multidimensionalen Datenstruktur 20 erlaubt es insbesondere, eine Robustheit 25 eines Kl-basierten Informationsverarbeitungssystems 10 auch ohne die Daten 11a und ohne das Kl-basierte Informationsverarbeitungssystem 10 selbst beurteilen zu können. Dies ist insbesondere bei sensiblen Daten von Vorteil.

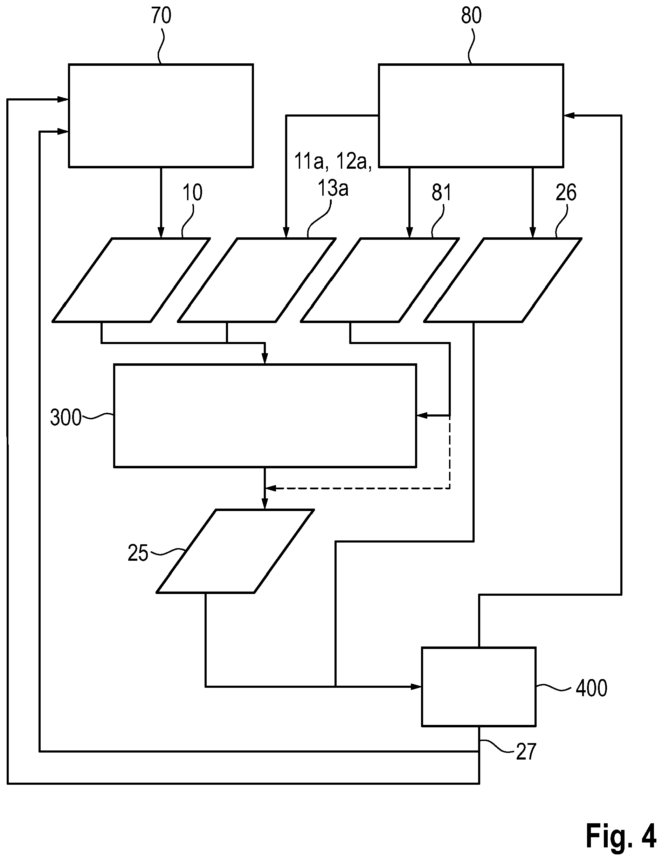

In Fig. 4 ist ein schematisches Ablaufdiagramm einer Ausführungsform des Verfahrens zum Bewerten und Zertifizieren einer Robustheit 25 eines Kl-basierten Informationsverarbeitungssystems 10, beispielsweise eines (trainierten) Neuronalen Netzes, gezeigt. Das Verfahren ist hier beispielhaft in ein Verfahren zum automatisierten Erzeugen und Bewerten bzw. Zertifizieren von Kl-basierten Informationsverarbeitungssystemen 10 eingebettet.

Ausgangspunkt ist Kl-basiertes Informationsverarbeitungssystem 10, beispielsweise ein (trainiertes) Neuronales Netz, das in einem Erzeugungsprozess 70 ("Model Factory") erzeugt und trainiert wurde. Das Erzeugen und Trainieren des Kl-basierten Informationsverarbeitungssystems 10 kann hierbei automatisiert erfolgen (z.B. mittels AutoML) oder "manuell" durch ein Entwicklungsteam.

Ferner werden Überprüfungsanforderungen 80 vorgegeben. Die Überprüfungsanforderungen 80 definieren insbesondere, auf welche Weise das Kl-basierte Informationsverarbeitungssystem 10 bewertet werden soll, das heißt, welche Daten 11a, Datenaugmentierungsverfahren 12a und/oder welche Differenzmaße 13a berücksichtigt werden sollen, und über eine Berichtsdefinition 81, welche Ergebnisse der Bewertung Inhalt einer Ausgabe oder eines Berichts sein sollen. Ferner umfassen die Überprüfungsanforderungen 80 die Robustheitsanforderungen 26, das heißt beispielsweise Schwellenwerte für die Robustheit 25, die nicht überschritten werden dürfen, wenn das Kl-basierte Informationsverarbeitungssystem 10 als robust zertifiziert werden soll.

Das Kl-basierte Informationsverarbeitungssystem 10, die Daten 11a, das oder die Datenaugmentierungsverfahren 12a und/oder das oder die Differenzmaß(e) 13a und die Berichtsdefinition 81 werden dem mit Bezug auf die Fig. 3 bereits beschriebenen Metrikgenerator 300 übergeben. Der Metrikgenerator 300 liefert als Ergebnis mindestens eine Robustheit 25 des Kl-basierten Informationsverarbeitungssystems 10 (z.B. in Form der in Fig. 3 gezeigten Key Perfomance Indikatoren 40), indem die in der multidimensionalen Datenstruktur 20 (Figuren 1, 2 und 3) enthaltenen Differenzwerte 22 ausgewertet werden.

In einem Verfahrensschritt 400 wird die bestimmte mindestens eine Robustheit 25 mit der mindestens einen Robustheitsanforderung 26 verglichen. Basierend auf einem Vergleichsergebnis wird das Kl-basierte Informationsverarbeitungssystem 10 entweder verworfen, mit einer geänderten multidimensionalen Datenstruktur durch den Metrikgenerator 300 erneut bewertet oder als robust zertifiziert. Als Ergebnis des Verfahrensschritts 400 wird hierzu ein Ergebnissignal 27 an den Erzeugungsprozess 70 zurückgegeben, damit das Kl-basierte Informationsverarbeitungssystem 10 entweder verworfen, erneut bewertet oder zertifiziert wird.

Es kann insbesondere vorgesehen sein, dass das Kl-basierte Informationsverarbeitungssystem 10 nach einer Zertifizierung in einen Speicher von mindestens einem Steuergerät eingeladen wird. Zusätzlich kann vorgesehen sein, dass die multidimensionale Datenstruktur in den Speicher des Steuergeräts geladen wird.

Mittels des in dieser Offenbarung beschriebenen Verfahrens zum Bewerten und Zertifizieren einer Robustheit eines Kl-basierten Informationsverarbeitungssystems 10 wird eine vollautomatische Entwicklung, Bewertung und/oder Zertifizierung und Bereitstellung von KI-basierten Informationsverarbeitungssystems 10, beispielsweise von Neuronalen Netzen, ermöglicht. Durch die Möglichkeit der Automatisierung können Zeit, Aufwand und Kosten eingespart werden. Durch das Verwenden der multidimensionalen Datenstruktur beim Bewerten kann der Bewertungs- und Zertifizierungsprozess darüber hinaus im Hinblick auf eine Reproduzierbarkeit, eine Dokumentation und eine Vergleichbarkeit verbessert werden.

### Bezugszeichenliste

- 1: Vorrichtung
- 2: Datenverarbeitungseinrichtung
- 3: Recheneinrichtung
- 4: Speicher
- 5: Schnittstelle
- 9: Eingangsparameter
- 10: Kl-basiertes Informationsverarbeitungssystem
- 11: Datensatz
- 11a: Daten
- 12: Datenaugmentierungsdefinition
- 12a: Datenaugmentierungsverfahren
- 13: Differenzmaßdefinition
- 13a: Differenzmaß
- 14: Unterparameter
- 15: Filterkriterium
- 16: Verteilungsfunktion
- 17: Verteilungen
- 18: Relevanz
- 20: multidimensionale Datenstruktur
- 20+: geänderte / erweiterte multidimensionale Datenstruktur
- 21: Datenpunkt
- 22: Differenzwert
- 23: inferiertes Ergebnis
- 25: Robustheit
- 26: Robustheitsanforderung
- 27: Ergebnissignal
- 28: Optimierungskriterium
- 29: Vergleichsergebnis
- 30: Steuergerät
- 40: Key Performance Indikator
- 41: Graph
- 42: Bericht
- 43: Histogramm
- 44: skalarer Wert
- 45: Heatmap
- 46: Kuchengraphik
- 50: gewünschtes Filterkriterium
- 51: gewünschte Achsen- bzw. Dimensionsauswahl
- 52: gewünschtes Aggregationsverfahren
- 53: gewünschtes Visualisierungsverfahren
- 60: System
- 70: Erzeugungsprozess
- 80: Überprüfungsanforderungen
- 81: Berichtsdefinition
- 90: Verfahrensschritt
- 100-102: Verfahrensschritte
- 200-202: Verfahrensschritte
- 300: Metrikgenerator
- 400: Verfahrensschritt
- 1000: Vorrichtung

## Patentansprüche

1. Computerimplementiertes Verfahren zum Bewerten und Zertifizieren einer Robustheit (25) eines Kl-basierten Informationsverarbeitungssystems (10), wobei das Kl-basierte Informationsverarbeitungssystem (10) eine Funktion für das automatisierte Fahren eines Kraftfahrzeugs und/oder für eine Fahrerassistenz des Kraftfahrzeugs und/oder für eine Erfassung des Umfelds des Kraftfahrzeugs und/oder Wahrnehmung des Umfelds des Kraftfahrzeugs oder für eine andere Anwendung zum Auswerten von erfassten Sensordaten mindestens eines Sensors des Kraftfahrzeugs und zum Erzeugen von Steuersignalen bereitstellt,
wobei zugehörig zu dem Kl-basierten Informationsverarbeitungssystem (10) mindestens eine multidimensionale Datenstruktur (20) empfangen oder erzeugt wird, wobei in der mindestens einen multidimensionalen Datenstruktur (20) jeweils zumindest mittels mindestens eines Differenzmaßes (13a) bestimmte Differenzwerte (22) zwischen Ausgangsdaten des Kl-basierten Informationsverarbeitungssystems (10), die für nicht augmentierte Daten (11a) erhalten wurden, und Ausgangsdaten des Kl-basierten Informationsverarbeitungssystems (10), die für augmentierte Daten erhalten wurden, in Abhängigkeit zumindest der Dimensionen Datensatz (11), Datenaugmentierungsdefinition(en) (12) und Differenzmaßdefinition(en) (13) hinterlegt sind,
wobei aus zumindest einer Auswahl der Differenzwerte (22) mindestens eine Robustheit (25) des Kl-basierten Informationsverarbeitungssystems (10) bestimmt und mit mindestens einer Robustheitsanforderung (26) verglichen wird, und
wobei basierend auf einem Vergleichsergebnis (29) das Kl-basierte Informationsverarbeitungssystem (10) entweder verworfen, mit einer geänderten multidimensionalen Datenstruktur (20+) erneut bewertet oder als robust zertifiziert wird, wobei das Kl-basierte Informationsverarbeitungssystem (10) in einem Steuergerät (30) des Kraftfahrzeugs nur aktiviert wird und/oder ausgeführt wird, wenn eine Zertifizierung nachgewiesen ist,
wobei hierzu eine Information in dem Speicher des Steuergeräts (30) geändert oder hinterlegt wird, die eine Erlaubnis zur Aktivierung bzw. Verwendung des Kl-basierten Informationsverarbeitungssystems (10) beinhaltet, und wobei die Aktivierung mittels eines, die Zertifizierung beinhaltenden, Ergebnissignals (27) erfolgt, das dem Steuergerät (30) zugeführt wird, und das die Aktivierung in dem Steuergerät (30) bewirkt.

2. Verfahren nach Anspruch 1, **dadurch gekennzeichnet, dass** das Kl-basierte Informationsverarbeitungssystem (10) nach einer Zertifizierung in einen Speicher von mindestens einem Steuergerät (30) eingeladen wird.

3. Verfahren nach Anspruch 1 oder 2, **dadurch gekennzeichnet, dass** zum Bereitstellen einer geänderten multidimensionalen Datenstruktur (20+) mindestens eine der folgenden Dimensionen geändert und/oder erweitert wird: Datensatz (11), Datenaugmentierungsdefinition (12), Differenzmaßdefinition (13).

4. Verfahren nach einem der vorangegangenen Ansprüche, **dadurch gekennzeichnet, dass** eine Struktur und/oder Parameter und/oder ein Training des Kl-basierten Informationsverarbeitungssystems (10) basierend auf dem Vergleichsergebnis (29) geändert wird, wobei das geänderte KI-basierte Informationsverarbeitungssystem (10) erneut bewertet und/oder zertifiziert wird.

5. Verfahren nach einem der vorangegangenen Ansprüche, **dadurch gekennzeichnet, dass** eine Menge aus mehreren unterschiedlichen Kl-basierten Informationsverarbeitungssystemen (10) bewertet wird, wobei dasjenige Kl-basierte Informationsverarbeitungssystem (10) ausgewählt wird, das die mindestens eine Robustheitsanforderung (26) hinsichtlich zumindest eines Optimierungskriteriums (28) am besten erfüllt.

6. Verfahren nach einem der vorangegangenen Ansprüche, **dadurch gekennzeichnet, dass** das Vergleichsergebnis (29) für jede der mindestens einen Robustheitsanforderungen (26) ausgegeben wird.

7. Verfahren nach einem der vorangegangenen Ansprüche, **dadurch gekennzeichnet, dass** zusätzlich mindestens ein geändertes Kl-basiertes Informationsverarbeitungssystem (10) bewertet wird, wobei die jeweils bestimmten Robustheiten (25) des Kl-basierten Informationsverarbeitungssystems (10) und des mindestens einen geänderten Kl-basierten Informationsverarbeitungssystems (10) miteinander verglichen werden, und wobei basierend auf einem Vergleichsergebnis der Robustheiten (25) eine Selektionsentscheidung für das Kl-basierte Informationsverarbeitungssystem (10) oder das mindestens eine geänderte KI-basierte Informationsverarbeitungssystem (10) getroffen wird.

8. Verfahren nach einem der Ansprüche 1 bis 7, **dadurch gekennzeichnet, dass** das KI-basierte Informationsverarbeitungssystem (10) ein Neuronales Netz ist und/oder mindestens ein Neuronales Netz umfasst.

9. Verfahren nach einem der Ansprüche 1 bis 8, **dadurch gekennzeichnet, dass** die mindestens eine zu dem Kl-basierten Informationsverarbeitungssystem (10) zugehörige multidimensionale Datenstruktur (20) mittels eines Steuergeräts bereitgestellt wird, in dessen Speicher die multidimensionale Datenstruktur (20) gespeichert ist, wobei die bestimmten Differenzwerte (22) durch Abfragen und/oder Abrufen der bestimmten Differenzwerte (22) aus dem Speicher des Steuergeräts empfangen werden.

10. Vorrichtung (1) zum Bewerten und Zertifizieren einer Robustheit (25) eines Kl-basierten Informationsverarbeitungssystems (10), wobei das Kl-basierte Informationsverarbeitungssystem (10) eine Funktion für das automatisierte Fahren eines Kraftfahrzeugs und/oder für eine Fahrerassistenz des Kraftfahrzeugs und/oder für eine Erfassung des Umfelds des Kraftfahrzeugs und/oder Wahrnehmung des Umfelds des Kraftfahrzeugs oder für eine andere Anwendung zum Auswerten von erfassten Sensordaten mindestens eines Sensors des Kraftfahrzeugs und zum Erzeugen von Steuersignalen bereitstellt, umfassend eine Datenverarbeitungseinrichtung (2), wobei die Datenverarbeitungseinrichtung (2) dazu eingerichtet ist, zugehörig zu dem Kl-basierten Informationsverarbeitungssystem (10) mindestens eine multidimensionale Datenstruktur (20) zu empfangen oder zu erzeugen, wobei in der mindestens einen multidimensionalen Datenstruktur (20) jeweils zumindest mittels mindestens eines Differenzmaßes (13a) bestimmte Differenzwerte (22) zwischen Ausgangsdaten des Kl-basierten Informationsverarbeitungssystems (10), die für nicht augmentierte Daten (11a) erhalten wurden, und Ausgangsdaten des Kl-basierten Informationsverarbeitungssystems (10), die für augmentierte Daten erhalten wurden, in Abhängigkeit zumindest der Dimensionen Datensatz (11), Datenaugmentierungsdefinition(en) (12) und Differenzmaßdefinition(en) (13) hinterlegt sind,
aus zumindest einer Auswahl der Differenzwerte (22) mindestens eine Robustheit (25) des Kl-basierten Informationsverarbeitungssystems (10) zu bestimmen und mit mindestens einer Robustheitsanforderung (26) zu vergleichen, und basierend auf einem Vergleichsergebnis (29) das Kl-basierte Informationsverarbeitungssystem (10) entweder zu verwerfen, mit einer geänderten multidimensionalen Datenstruktur (20) erneut zu bewerten oder als robust zu zertifizieren,
wobei das Kl-basierte Informationsverarbeitungssystem (10) in einem Steuergerät (30) des Kraftfahrzeugs nur aktiviert wird und/oder ausgeführt wird, wenn eine Zertifizierung nachgewiesen ist,
wobei die Datenverarbeitungseinrichtung (2) ferner dazu eingerichtet ist,
hierzu eine Information in dem Speicher des Steuergeräts (30) zu ändern oder zu hinterlegen, die eine Erlaubnis zur Aktivierung bzw. Verwendung des Kl-basierten Informationsverarbeitungssystems (10) beinhaltet, und die Aktivierung mittels eines, die Zertifizierung beinhaltenden, Ergebnissignals (27) durchzuführen, das dem Steuergerät (30) zugeführt wird, und das die Aktivierung in dem Steuergerät (30) bewirkt.

11. Computerprogramm, umfassend Befehle, die bei der Ausführung des Computerprogramms durch einen Computer diesen veranlassen, die Verfahrensschritte des Verfahrens nach einem beliebigen der Ansprüche 1 bis 9 auszuführen.

12. Datenträgersignal, das ein Computerprogramm gemäß Anspruch 11 überträgt.

## Claims

1. Computer-implemented method for assessing and certifying the robustness (25) of an Al-based information processing system (10), wherein the Al-based information processing system (10) provides a function for automated driving of a motor vehicle and/or for driver assistance of the motor vehicle and/or for capturing the environment of the motor vehicle and/or perceiving the environment of the motor vehicle or for another application for evaluating captured sensor data of at least one sensor of the motor vehicle and for generating control signals,
wherein at least one multidimensional data structure (20) is received or generated that belongs to the Al-based information processing system (10), wherein in the at least one multidimensional data structure (20), at least by means of at least one difference measure (13a), determined difference values (22) between source data of the Al-based information processing system (10) obtained for non-augmented data (11a) and output data of the Al-based information processing system (10) obtained for augmented data are stored on the basis of at least the dimensions data set (11), data augmentation definition(s) (12) and difference measure definition(s) (13),
wherein at least the robustness (25) of the Al-based information processing system (10) is determined from at least a selection of the difference values (22) and compared with at least one robustness requirement (26), and
wherein, on the basis of a comparison result (29), the Al-based information processing system (10) is either discarded, reassessed with a modified multidimensional data structure (20+) or certified as robust,
wherein the Al-based information processing system (10) is only activated and/or executed in a control unit (30) of the motor vehicle if certification has been demonstrated,
wherein, for this purpose, information is modified or stored in the memory of the control unit (30) which includes permission to activate or use the Al-based information processing system (10), and wherein the activation is effected by means of a result signal (27), containing the certification, which is supplied to the control unit (30) and which causes the activation in the control unit (30).

2. Method according to claim 1, **characterized in that** the Al-based information processing system (10) is loaded into a memory of at least one control unit (30) after certification.

3. Method according to claim 1 or 2, **characterized in that** in order to provide a modified multidimensional data structure (20+), at least one of the following dimensions is modified and/or extended: data set (11), data augmentation definition (12), difference measure definition (13).

4. Method according to any of the preceding claims, **characterized in that** a structure and/or parameters and/or training of the Al-based information processing system (10) is modified on the basis of the comparison result (29), the modified Al-based information processing system (10) being reassessed and/or re-certified.

5. Method according to any of the preceding claims, **characterized in that** a set of multiple different Al-based information processing systems (10) is assessed, the Al-based information processing system (10) that best meets the at least one robustness requirement (26) with respect to at least one optimization criterion (28) being selected.

6. Method according to any of the preceding claims, **characterized in that** the comparison result (29) is issued for each of the at least one robustness requirements (26).

7. Method according to any of the preceding claims, **characterized in that** additionally, at least one modified Al-based information processing system (10) is assessed, the respective determined robustnesses (25) of the Al-based information processing system (10) and of the at least one modified Al-based information processing system (10) being compared, and, on the basis of a comparison result of the robustnesses (25), a selection decision being made for the Al-based information processing system (10) or the at least one modified Al-based information processing system (10).

8. Method according to any of claims 1 to 7, **characterized in that** the Al-based information processing system (10) is a neural network and/or comprises at least one neural network.

9. Method according to any of claims 1 to 8, **characterized in that** the at least one multidimensional data structure (20) belonging to the Al-based information processing system (10) is provided by means of a control unit, in the memory of which the multidimensional data structure (20) is stored, the determined difference values (22) being received by querying and/or retrieving the determined difference values (22) from the memory of the control unit.

10. Device (1) for assessing and certifying the robustness (25) of an Al-based information processing system (10), wherein the Al-based information processing system (10) provides a function for automated driving of a motor vehicle and/or for driver assistance of the motor vehicle and/or for capturing the environment of the motor vehicle and/or perceiving the environment of the motor vehicle or for another application for evaluating captured sensor data of at least one sensor of the motor vehicle and for generating control signals, comprising a data processing device (2), wherein the data processing device (2) is configured to receive or generate at least one multidimensional data structure (20) belonging to the Al-based information processing system (10), wherein, in the at least one multidimensional data structure (20), at least by means of at least one difference measure (13a), determined difference values (22) between source data of the Al-based information processing system (10) obtained for non-augmented data (11a) and output data of the Al-based information processing system (10) obtained for augmented data are stored on the basis of at least the dimensions data set (11), data augmentation definition(s) (12) and difference measure definition(s) (13),
to determine at least the robustness (25) of the Al-based information processing system (10) from at least a selection of the difference values (22) and to compare it with at least one robustness requirement (26), and, on the basis of a comparison result (29), either to discard the Al-based information processing system (10), to reassess it with a modified multidimensional data structure (20) or to certify it as robust,
wherein the Al-based information processing system (10) is only activated and/or executed in a control unit (30) of the motor vehicle if certification has been demonstrated,
wherein the data processing device (2) is further configured to
modify or store, for this purpose, information in the memory of the control unit (30) which includes permission to activate or use the Al-based information processing system (10), and to effect the activation by means of a result signal (27) which contains the certification, which is supplied to the control unit (30) and which causes the activation in the control unit (30).

11. Computer program comprising commands which, when the computer program is executed by a computer, cause said computer to execute the method steps of the method according to any of claims 1 to 9.

12. Data carrier signal which transmits a computer program according to claim 11.

## Revendications

1. Procédé mis en œuvre par ordinateur pour évaluer et certifier une robustesse (25) d'un système de traitement d'informations (10) basé sur l'IA, dans lequel le système de traitement d'informations (10) basé sur l'IA met à disposition une fonction pour la conduite automatisée d'un véhicule automobile et/ou pour une assistance au conducteur du véhicule automobile et/ou pour une détection de l'environnement du véhicule automobile et/ou une perception de l'environnement du véhicule automobile ou pour une autre application pour évaluer des données de capteur détectées d'au moins un capteur du véhicule automobile et pour générer des signaux de commande,
dans lequel au moins une structure de données multidimensionnelle (20) est reçue ou générée en association avec le système de traitement d'informations (10) basé sur l'IA, dans lequel dans l'au moins une structure de données multidimensionnelle (20), des valeurs de différence (22) déterminées respectivement au moins par le biais d'au moins une mesure de différence (13a) entre des données de sortie du système de traitement d'informations (10) basé sur l'IA, qui ont été obtenues pour des données non augmentées (11a), et des données de sortie du système de traitement d'informations (10) basé sur l'IA qui ont été obtenues pour des données augmentées sont enregistrées, en fonction d'au moins les dimensions de jeu de données (11), de définition(s) d'augmentation de données (12) et de définition(s) de mesure de différence (13),
dans lequel au moins une robustesse (25) du système de traitement d'informations (10) basé sur l'IA est déterminée à partir d'au moins une sélection des valeurs de différence (22) et est comparée à au moins une exigence de robustesse (26), et
dans lequel, sur la base d'un résultat de comparaison (29), le système de traitement d'informations (10) basé sur l'IA est soit rejeté, soit réévalué avec une structure de données multidimensionnelle modifiée (20+), soit certifié comme étant robuste,
dans lequel le système de traitement d'informations (10) basé sur l'IA n'est activé et/ou exécuté dans un appareil de commande (30) du véhicule automobile que si une certification est prouvée,
dans lequel, à cet effet, une information est modifiée ou enregistrée dans la mémoire de l'appareil de commande (30), laquelle contient une autorisation d'activation ou d'utilisation du système de traitement d'informations (10) basé sur l'IA, et dans lequel l'activation s'effectue par le biais d'un signal de résultat (27) contenant la certification, qui est amené à l'appareil de commande (30) et qui provoque l'activation dans l'appareil de commande (30).

2. Procédé selon la revendication 1, **caractérisé en ce que** le système de traitement d'informations (10) basé sur l'IA est chargé dans une mémoire d'au moins un appareil de commande (30) après une certification.

3. Procédé selon la revendication 1 ou 2, **caractérisé en ce que,** pour mettre à disposition une structure de données multidimensionnelle modifiée (20+), au moins l'une des dimensions suivantes est modifiée et/ou étendue : jeu de données (11), définition d'augmentation des données (12), définition de mesure de différence (13).

4. Procédé selon l'une des revendications précédentes,
**caractérisé en ce qu'**une structure et/ou des paramètres et/ou un entraînement du système de traitement d'informations (10) basé sur l'IA sont modifiés sur la base du résultat de comparaison (29), dans lequel le système de traitement d'informations (10) basé sur l'IA modifié est à nouveau évalué et/ou certifié.

5. Procédé selon l'une des revendications précédentes,
**caractérisé en ce qu'**un ensemble de plusieurs systèmes de traitement d'informations (10) basés sur l'IA différents est évalué, dans lequel le système de traitement d'informations (10) basé sur l'IA qui satisfait le mieux à l'au moins une exigence de robustesse (26) concernant au moins un critère d'optimisation (28) est sélectionné.

6. Procédé selon l'une des revendications précédentes,
**caractérisé en ce que** le résultat de comparaison (29) est émis pour chacune de l'au moins une exigence de robustesse (26).

7. Procédé selon l'une des revendications précédentes,
**caractérisé en ce que,** en outre, au moins un système de traitement d'informations (10) basé sur l'IA modifié est évalué, dans lequel les robustesses (25) respectivement déterminées du système de traitement d'informations (10) basé sur l'IA et de l'au moins un système de traitement d'informations (10) basé sur l'IA modifié sont comparées entre elles, et dans lequel une décision de sélection pour le système de traitement d'informations (10) basé sur l'IA ou l'au moins un système de traitement d'informations (10) basé sur l'IA modifié est prise sur la base d'un résultat de comparaison des robustesses (25).

8. Procédé selon l'une des revendications 1 à 7, **caractérisé en ce que** le système de traitement d'informations (10) basé sur l'IA est un réseau neuronal et/ou comprend au moins un réseau neuronal.

9. Procédé selon l'une des revendications 1 à 8, **caractérisé en ce que** l'au moins une structure de données multidimensionnelle (20) associée au système de traitement d'informations (10) basé sur l'IA est mise à disposition par le biais d'un appareil de commande dans la mémoire duquel la structure de données multidimensionnelle (20) est stockée, dans lequel les valeurs de différence déterminées (22) sont reçues par interrogation et/ou appel des valeurs de différence déterminées (22) à partir de la mémoire de l'appareil de commande.

10. Dispositif (1) pour évaluer et certifier une robustesse (25) d'un système de traitement d'informations (10) basé sur l'IA, dans lequel le système de traitement d'informations (10) basé sur l'IA met à disposition une fonction pour la conduite automatisée d'un véhicule automobile et/ou pour une assistance au conducteur du véhicule automobile et/ou pour une détection de l'environnement du véhicule automobile et/ou une perception de l'environnement du véhicule automobile ou pour une autre application pour évaluer des données de capteur détectées d'au moins un capteur du véhicule automobile et pour générer des signaux de commande, comprenant un dispositif de traitement de données (2), dans lequel le dispositif de traitement de données (2) est conçu pour recevoir ou générer, en association avec le système de traitement d'informations (10) basé sur l'IA, au moins une structure de données multidimensionnelle (20), dans lequel, dans l'au moins une structure de données multidimensionnelle (20), des valeurs de différence (22) déterminées respectivement par le biais d'au moins une mesure de différence (13a) entre des données de sortie du système de traitement d'informations (10) basé sur l'IA, qui ont été obtenues pour des données non augmentées (11a), et des données de sortie du système de traitement d'informations (10) basé sur l'IA qui ont été obtenues pour des données augmentées, sont enregistrées en fonction d'au moins les dimensions de jeu de données (11), de définition(s) d'augmentation de données (12) et de définition(s) de mesure de différence (13),
pour déterminer, à partir d'au moins une sélection des valeurs de différence (22), au moins une robustesse (25) du système de traitement d'informations (10) basé sur l'IA et la comparer à au moins une exigence de robustesse (26), et, sur la base d'un résultat de comparaison (29), soit rejeter le système de traitement d'informations (10) basé sur l'IA, soit l'évaluer à nouveau avec une structure de données multidimensionnelle modifiée (20), soit le certifier comme étant robuste,
dans lequel le système de traitement d'informations (10) basé sur l'IA n'est activé et/ou exécuté dans un appareil de commande (30) du véhicule automobile que si une certification est prouvée,
dans lequel le dispositif de traitement de données (2) est en outre conçu,
pour modifier ou enregistrer à cet effet dans la mémoire de l'appareil de commande (30) une information qui contient une autorisation d'activation ou d'utilisation du système de traitement d'informations (10) basé sur l'IA, et réaliser l'activation par le biais d'un signal de résultat (27) contenant la certification, qui est amené à l'appareil de commande (30) et qui provoque l'activation dans l'appareil de commande (30).

11. Programme d'ordinateur, comprenant des instructions qui, lors de l'exécution du programme d'ordinateur par un ordinateur, amènent celui-ci à exécuter les étapes de procédé du procédé selon l'une quelconque des revendications 1 à 9.

12. Signal de support de données, qui transmet un programme d'ordinateur selon la revendication 11.
